(19) Europäisches Patentamt
European Patent Office
Office européen des brevets

(11) **EP 4 619 451 B1**

(12) **EUROPEAN PATENT SPECIFICATION**

(45) Date of publication and mention of the grant of the patent:
**05.08.2026 Bulletin 2026/32**

(21) Application number: **23805609.7**

(22) Date of filing: **15.11.2023**

(51) International Patent Classification (IPC):
***C08G 18/63*** *(2006.01)* ***C08G 18/40*** *(2006.01)*
***C08G 18/76*** *(2006.01)* ***C08G 79/00*** *(2006.01)*
***C08G 18/08*** *(2006.01)* ***C08G 18/42*** *(2006.01)*
***C08G 18/48*** *(2006.01)*

(52) Cooperative Patent Classification (CPC):
**C08G 18/0876; C08G 18/409; C08G 18/4208; C08G 18/4252; C08G 18/4288; C08G 18/4829; C08G 18/7621; C08G 18/7664;** C08G 2110/0008; C08G 2110/0025; C08G 2110/005

(86) International application number:
**PCT/EP2023/081854**

(87) International publication number:
**WO 2024/105080 (23.05.2024 Gazette 2024/21)**

(54) **MODIFIED POLYMER POLYOLS**
MODIFIZIERTE POLYMERPOLYOLE
POLYOLS POLYMÈRES MODIFIÉS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **16.11.2022 EP 22383106**

(43) Date of publication of application:
**24.09.2025 Bulletin 2025/39**

(73) Proprietor: **Repsol, S.A.**
**28045 Madrid (ES)**

(72) Inventors:
- **MUÑOZ DE DIEGO, César**
  **28935 MÓSTOLES (ES)**
- **VALERO MARRÓN, Manuel Jesús**
  **28935 MÓSTOLES (ES)**
- **LEMOINE, Olivier**
  **28935 MÓSTOLES (ES)**
- **GALDÁMEZ PEÑA, José Román**
  **28935 MÓSTOLES (ES)**

(74) Representative: **ZBM Patents - Zea, Barlocci & Markvardsen**
**Rambla de Catalunya, 123**
**08008 Barcelona (ES)**

(56) References cited:
**EP-A1- 3 838 959** **EP-A1- 3 838 962**
**WO-A1-2019/008140**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 619 451 B1

## Description

This application claims the benefit of European Patent Application 22383106.6 filed on November 16, 2022.

The present disclosure relates to modified polymer polyols and methods for the preparation thereof. Since the modified polymer polyols of the present disclosure are useful in the preparation of both polyurethane and polyisocyanurate foams, the present disclosure also relates to polyurethane foams which shows an improvement in porosity and wet compression set; as well as polyisocyanurate foams which show an improvement in reaction to fire according to DIN 4102-1.

BACKGROUND ART

Various types of modified polymer polyols are used as raw materials for manufacturing flexible polyurethane foams, as well as other polyurethane products or polyisocyanurate foams. They have a continuous phase made up of one or more compounds having multiple hydroxyl groups ("base polyol") into which another polymer is dispersed in the form of particles.

In WO2019008140 there were disclosed new modified polymer polyols comprising at least one base polyol and a stable dispersion of polymeric particles in the at least one base polyol, the modified polymer polyol being obtainable by a process comprising the preparation of the polymeric particles in the presence of the at least one base polyol by a polycondensation reaction of

a) at least one compound bearing at least one basic-nitrogen atom characterized by the presence in the molecule of at least one hydrogen atom attached to a nitrogen atom; with

b) at least one compound bearing a phosphorus atom selected from the group consisting of

b.1) a mixture of compounds bearing a phosphorus atom which is selected from the groups consisting of at least one hydroxyalkylphosphine, at least one hydroxyalkylphosphonium salt, at least one hydroxyalkylphosphine oxide and a combination thereof; or

b.2) a mixture of condensation products from the mixture of compounds b1) and at least one compound bearing at least one basic nitrogen atom; and

b.3) a mixture thereof.

The modified polymer polyols thus obtained show improved flame-retardant properties, so these polyols are particularly suitable for the preparation of polyurethane or polyisocyanurate foams with flame-proofing properties.

Also, in the European application EP3838959 it is described that using a liquid polyol mixture comprising a base polyol and a monofunctional polyetheramine having a propylene oxide content from 30 and 99 wt%, the resulting modified polymer polyol dispersion shows an improvement in its stability, and the polyurethane materials obtained with the resulting modified polymer polyol show low formaldehyde release.

Nevertheless, it is noted that when the modified polymer polyols therein disclosed are used in the preparation of polyurethane foams, the resulting foams show a closed-cell structure, and their wet compression set can be improved. Further, when the modified polymer polyols disclosed in the prior art are used in the preparation of polyisocyanurate foams, the resulting foams show a B3 category (Not pass) in reaction to fire according to DIN 4102-1.

Thus, there exists a need to provide an improved method of preparation of modified polymer polyols comprising at least one base polyol and a stable dispersion of polymeric particles in the at least one base polyol. Particularly, those stable modified polymer polyols which are useful to prepare polyisocyanurate foams, polyurethane foams, adhesives, elastomers, sealings and coatings showing an appropriate porosity, wet compression set and with flame retardant properties.

SUMMARY

The inventors have found that purifying the crude modified polymer polyol by stripping under reduced pressure, preferably ranging from 0.1 mbar to 500 mbar, wherein the stripping step is carried out by introducing a stripping medium selected from an inert gas, stream or air, into the reactor chamber or into a stripping column wherein the crude modified polymer polyol has been transferred, whereby the stripping medium at least partially removes a solid comprising a complex mixture of compounds comprising the unreacted compounds bearing at least one basic-nitrogen atom and reaction sub-products; and recovering the purified modified polymer polyol, the resulting purified modified polymer polyol may be used in the preparation of polyurethane foams which show an improvement in porosity and wet compression set; as well as polyisocyanurate foams which show an improvement in reaction to fire according to DIN 4102-1.

Thus, according to a first aspect of the present invention, it is provided a process for the preparation of a modified

polymer polyol comprising at least one base polyol and a stable dispersion of polymeric particles in the at least one base polyol, the process comprising

(1) preparing a crude modified polymer polyol by reacting in the at least one base polyol and under polymerisation conditions

a) at least one compound bearing at least one basic-nitrogen atom characterized by the presence in the molecule of at least one hydrogen atom attached to a nitrogen atom; with
b) at least one compound bearing a phosphorous atom selected from the group consisting of

b.1) at least one compound selected from a hydroxyalkylphosphine of a formula (I), a hydroxyalkylphosphonium salt of a formula (II), a hydroxyalkylphosphine oxide of a formula (III), and a combination thereof;
b.2) a mixture of condensation products resulting from the reaction between at least one hydroxyalkylphosphine compound of a formula (I) or at least one hydroxyalkylphosphonium salt of a formula (II) and at least one compound bearing at least one basic-nitrogen atom characterized by the presence in the molecule of at least one hydrogen atom attached to a nitrogen atom; and
b.3) mixtures thereof;

wherein:

A) the hydroxyalkylphosphine of formula (I) is as follows:

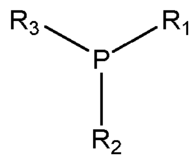

(I)

wherein $R_1$, $R_2$ and $R_3$ are each independently selected from H, linear or branched $(C_1\text{-}C_{18})$alkyl, $(C_3\text{-}C_{18})$cycloalkyl, linear or branched $(C_2\text{-}C_{18})$alkenyl, $(C_6\text{-}C_{18})$aryl, $(C_7\text{-}C_{18})$arylalkyl, linear or branched hydroxy$(C_1\text{-}C_6)$alkyl, $(C_7\text{-}C_{18})$alkylaryl and a radical of formula (IV)

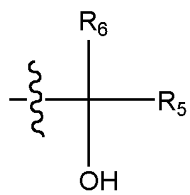

(IV)

wherein $R_5$ and $R_6$ are each independently selected from H, linear or branched $(C_1\text{-}C_{18})$alkyl, $(C_3\text{-}C_{18})$cycloalkyl, linear or branched $(C_2\text{-}C_{18})$alkenyl, $(C_6\text{-}C_{18})$aryl, $(C_7\text{-}C_{18})$arylalkyl, linear or branched hydroxy$(C_1\text{-}C_6)$alkyl,and $(C_7\text{-}C_{18})$alkylaryl; and the wavy line means the attachment point of the radical of formula (IV) to the phosphorus atom;
with the proviso that at least one of $R_1$, $R_2$ and $R_3$ is a radical of formula (IV);

B) the hydroxyalkylphosphonium salt of formula (II) is as follows:

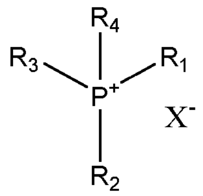

( II )

wherein $R_1$, $R_2$, $R_3$ and $R_4$ are each independently selected from H, linear or branched $(C_1\text{-}C_{18})$alkyl, $(C_3\text{-}C_{18})$cycloalkyl, linear or branched $(C_2\text{-}C_{18})$alkenyl, $(C_6\text{-}C_{18})$aryl, $(C_7\text{-}C_{18})$arylalkyl, linear or branched hydroxy$(C_1\text{-}C_6)$alkyl, $(C_7\text{-}C_{18})$alkylaryl and a radical of formula (IV):

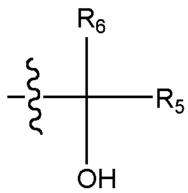

( IV )

wherein $R_5$ and $R_6$ are each independently selected from H, linear or branched $(C_1\text{-}C_{18})$alkyl, $(C_3\text{-}C_{18})$cycloalkyl, linear or branched $(C_2\text{-}C_{18})$alkenyl, $(C_6\text{-}C_{18})$aryl, $(C_7\text{-}C_{18})$arylalkyl, linear or branched hydroxy$(C_1\text{-}C_6)$alkyl, and $(C_7\text{-}C_{18})$alkylaryl; and the wavy line means the attachment point of the radical of formula (IV) to the phosphorus atom; and $X^-$ represents any anion suitable for compensate the positive charge of the phosphonium cation; with the proviso that at least one of $R_1$, $R_2$, $R_3$ and $R_4$ is a radical of formula (IV); and

C) the hydroxyalkylphosphine oxide of formula (III) is as follows:

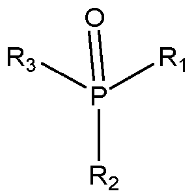

( I II )

wherein $R_1$, $R_2$ and $R_3$ are each independently selected from H, linear or branched $(C_1\text{-}C_{18})$alkyl, $(C_3\text{-}C_{18})$cycloalkyl, linear or branched $(C_2\text{-}C_{18})$alkenyl, $(C_6\text{-}C_{18})$aryl, $(C_7\text{-}C_{18})$arylalkyl, linear or branched hydroxy$(C_1\text{-}C_6)$alkyl, $(C_7\text{-}C_{18})$alkylaryl and a radical of formula (IV):

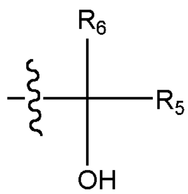

( IV )

wherein $R_5$ and $R_6$ are each independently selected from H, linear or branched $(C_1\text{-}C_{18})$alkyl, $(C_3\text{-}C_{18})$cycloalkyl, linear or branched $(C_2\text{-}C_{18})$alkenyl, $(C_6\text{-}C_{18})$aryl, $(C_7\text{-}C_{18})$arylalkyl, linear or branched hydroxy$(C_1\text{-}C_6)$alkyl, and $(C_7\text{-}C_{18})$alkylaryl; and the wavy line means the attachment point of the radical of formula (IV) to the phosphorus atom;

with the proviso that at least one of $R_1$, $R_2$ and $R_3$ is a radical of formula (IV);
wherein the compound bearing at least one basic-nitrogen atom is selected from

- melamine, trimethylol melamine, dimethylaminopropylamine, diethylenetriamine, tertiary octylamine, polyethyleneimine;
- the compounds of a formula (V) or the compounds of a formula (VI); and
- mixtures thereof;

wherein the compounds of formula (V) are as follows

$R_7$-$NH_2$ (V)

wherein $R_7$ is -H, -($C_1$-$C_3$)Alkyl, ($C_1$-$C_3$)Alkyl-CO-, $NH_2$-CO-, -$(CH_2)_n$-$NH_2$, -CN, -$NH_2$, -$SO_2NH_2$, cyclohexyl, phenyl, -$SO_2OH$ or -NHCONHNH$_2$; wherein n is an integer from 1-18;
and the compounds of formula (VI) are as follows:

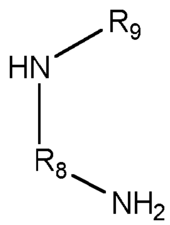

( VI )

wherein $R_8$ is selected from NH=C< and O=C<; S=C<; and $R_9$ is selected from H, -CN, -$NH_2$, -$CONH_2$, -CONHCONH$_2$, and -CONHCONHCONH$_2$;
and wherein the process further comprises

(2) purifying the crude modified polymer polyol obtained in (1) by stripping under reduced pressure, preferably ranging from 0.1 mbar to 500 mbar, wherein the stripping step is carried out by introducing a stripping medium selected from an inert gas, stream or air, into the reactor chamber or into a stripping column wherein the crude modified polymer polyol has been transferred, whereby the stripping medium at least partially removes a solid comprising a complex mixture of compounds comprising the unreacted compounds bearing at least one basic-nitrogen atom and reaction sub-products; and
(3) recovering the purified modified polymer polyol.

In a second aspect, the present invention provides a modified polymer polyol obtainable by a process as defined herein.
In a third aspect, the present invention provides a process for preparing a polyurethane material, the method comprising reacting at least one polyisocyanate with an isocyanate-reactive component which comprises at least one modified polymer polyol as defined herein.
In a fourth aspect, the present invention provides a polyurethane material obtainable by the process as defined herein.
In a fifth aspect, the present invention provides a process preparing a polyisocyanurate material, the method comprising reacting a mixture of isocyanate-reactive materials, a polyisocyanate component, at least one physical blowing agent, at least one trimerization catalyst, and at least one surfactant,

i. wherein the mixture of isocyanate-reactive materials comprises a modified polymer polyol as described herein, optionally in mixture with at least one polyester polyol;
ii. wherein the reaction mixture is reacted at an Isocyanate Index ranging from 1.5 to 7.0.

In a sixth aspect, the present invention provides a polyisocyanurate material obtainable as defined herein.
In a seventh aspect, the present invention provides an article of manufacture comprising the polyurethane material or the polyisocyanurate material as defined herein.

DETAILED DESCRIPTION

In accordance with WO2019008140, once obtained the modified polymer polyol comprising the stable dispersion of polymeric particles, the volatile compounds present in the media, such as water or the corresponding aldehyde, may be removed by vacuum distillation.

Additionally, in accordance with EP3838959, in order to reduce the formaldehyde release from polyurethane material prepared using the modified polymer polyols, the mixture of phosphorous-containing components b.1), previously to its reaction with the compound bearing at least one basic-nitrogen atom, is distilled out at reduced or atmospheric pressure at a distillation temperature from 50-120 °C.

Thus, both prior documents refer to the use of vacuum distillation in order to remove volatile compounds, e.g. water, solvents and formaldehyde, either from the mixture of phosphorous-containing components b.1), before the preparation of the polymeric particles in the at least one base polyol; or from the reaction media once obtained the crude modified polymer polyol.

Despite that volatile removal processes, it has been observed that the polyurethane foams obtained with the modified polymer polyols according to the prior art, show a porosity and compression set, specially wet compression set that need to be improved for their usual applications. The same occurs with the polyisocyanurate foams which may be obtained from the modified polymer polyols as described in the above-mentioned prior art, which does not meet the reaction to fire standard according to DIN 4102-1.

Thus, the inventors herein have found that by purifying the crude modified polymer polyol by stripping under reduced pressure, preferably ranging from 0.1 mbar to 500 mbar, wherein the stripping step is carried out by introducing a stripping medium selected from an inert gas, stream or air, into the reactor chamber or into a stripping column wherein the crude modified polymer polyol has been transferred, whereby the stripping medium at least partially removes the undesired solid compounds, comprising a complex mixture of compounds comprising the unreacted compounds bearing at least one basic-nitrogen atom and reaction sub-products, and recovering the purified modified polymer polyol, they can prepare polyurethane foams which surprisingly show an improvement in porosity and wet compression set; as well as polyisocyanurate foams which show an improvement in reaction to fire according to DIN 4102-1.

Phosphines

As used herein, the term hydroxyalkylphosphine refers to an organic compound having at least one hydroxyalkyl group and at least one phosphine group.

In some examples of the present disclosure, the hydroxyalkylphosphines of formula (I) are selected from those wherein $R_1$, $R_2$ and $R_3$ are each independently selected from H, linear or branched $(C_1\text{-}C_6)$alkyl, $(C_3\text{-}C_6)$cycloalkyl, linear or branched $(C_2\text{-}C_6)$alkenyl, $(C_6\text{-}C_{12})$aryl, $(C_7\text{-}C_{12})$arylalkyl, linear or branched hydroxy$(C_1\text{-}C_4)$alkyl, $(C_7\text{-}C_{12})$alkylaryl and a radical of formula (IV); and wherein $R_5$ and $R_6$ are each independently selected from H, linear or branched $(C_1\text{-}C_6)$ alkyl, $(C_3\text{-}C_6)$cycloalkyl, linear or branched $(C_2\text{-}C_6)$alkenyl, $(C_6\text{-}C_{12})$aryl, $(C_7\text{-}C_{12})$arylalkyl, linear or branched hydroxy$(C_1\text{-}C_4)$alkyl and $(C_7\text{-}C_{12})$alkylaryl; with the proviso that at least one of $R_1$, $R_2$ and $R_3$ is a radical of formula (IV).

From these examples, particularly the hydroxyalkylphosphines of formula (I) are those wherein $R_1$, $R_2$ and $R_3$ are each independently selected from H, methyl, ethyl, propyl, isopropyl, n-butyl, t-butyl, hydroxymethyl, hydroxyethyl, hydroxyisopropyl, hydroxy n-butyl and hydroxy t-butyl; and wherein $R_5$ and $R_6$ are each independently selected from H, methyl, ethyl, propyl, isopropyl, n-butyl, t-butyl, hydroxymethyl, hydroxyethyl, hydroxyisopropyl, hydroxy n-butyl and hydroxy t-butyl; with the proviso that at least one of $R_1$, $R_2$ and $R_3$ is a radical of formula (IV).

In accordance with some particular examples, the hydroxyalkylphosphines of formula (I) are those wherein at least two of $R_1$, $R_2$ and $R_3$ are a radical of formula (IV); and wherein $R_5$ and $R_6$ are each independently selected from H, methyl, ethyl, propyl, isopropyl, n-butyl, t-butyl, hydroxymethyl, hydroxyethyl, hydroxyisopropyl, hydroxy n-butyl and hydroxy t-butyl. From these examples, more particularly the hydroxyalkylphosphines of formula (I) are those wherein at least two of $R_1$, $R_2$ and $R_3$ are a radical of formula (IV); and wherein $R_5$ and $R_6$ are H.

In accordance with other particular examples, the hydroxyalkylphosphines of formula (I) are those wherein $R_1$, $R_2$ and $R_3$ are a radical of formula (IV); and wherein $R_5$ and $R_6$ are each independently selected from H, methyl, ethyl, propyl, isopropyl, n-butyl, t-butyl, hydroxymethyl, hydroxyethyl, hydroxy isopropyl, hydroxy n-butyl and hydroxy t-butyl. From these examples, more particularly the hydroxyalkylphosphines of formula (I) are those wherein $R_1$, $R_2$ and $R_3$ are a radical of formula (IV); and wherein $R_5$ and $R_6$ are H

Examples of hydroxyalkylphosphines of formula (I) above are tris(hydroxymethyl)phosphine, bis-(hydroxymethyl)-methyl phosphine, bis-(hydroxymethyl)-ethyl phosphine, bis(hydroxymethyl) propyl phosphine, bis-(hydroxymethyl)-butyl phosphine, bis(hydroxymethyl) pentyl phosphine, bis(hydroxymethyl) hexyl phosphine, (hydroxymethyl)-dimethyl phosphine, and (hydroxymethyl)- methyl-ethyl phosphine. A particular hydroxyalkylphosphine is tris(hydroxymethyl)phosphine (THP).

In accordance with other examples of the present disclosure, it is possible to use at least one hydroxyalkylphosphonium salt of formula (II) wherein $X^-$ is a monovalent, bivalent or trivalent ligand selected from chloride, bromide, iodide, sulphate, phosphate, hydrogen phosphate, dihydrogen phosphate, hydroxide, acetate, oxalate and citrate.

In some examples of the present disclosure, the hydroxyalkylphosphonium salts of formula (II) are those wherein $R_1$, $R_2$, $R_3$ and $R_4$ are each independently selected from H, linear or branched ($C_1$-$C_6$)alkyl, ($C_3$-$C_6$)cycloalkyl, linear or branched ($C_2$-$C_6$)alkenyl, ($C_6$-$C_{12}$)aryl, ($C_7$-$C_{12}$)arylalkyl, linear or branched hydroxy($C_1$-$C_4$)alkyl, ($C_7$-$C_{12}$)alkylaryl and a radical of formula (IV); and wherein $R_5$ and $R_6$ are each independently selected from H, linear or branched ($C_1$-$C_6$)alkyl, ($C_3$-$C_6$)cycloalkyl, linear or branched ($C_2$-$C_6$)alkenyl, ($C_6$-$C_{12}$)aryl, ($C_7$-$C_{12}$)arylalkyl, linear or branched hydroxy($C_1$-$C_4$) alkyl and ($C_7$-$C_{12}$)alkylaryl; with the proviso that at least one of $R_1$, $R_2$, $R_3$ and $R_4$ is a radical of formula (IV); and wherein $X^-$ is a monovalent, bivalent or trivalent ligand selected from chloride, bromide, iodide, sulphate, phosphate, hydrogen phosphate, dihydrogen phosphate, hydroxide, acetate, oxalate and citrate.

From these examples, particularly the hydroxyalkylphosphonium salts of formula (II) are those wherein $R_1$, $R_2$, $R_3$ and $R_4$ are each independently selected from H, methyl, ethyl, propyl, isopropyl, n-butyl, t-butyl, hydroxymethyl, hydroxyethyl, hydroxy isopropyl, hydroxy n-butyl and hydroxy t-butyl; and wherein $R_5$ and $R_6$ are each independently selected from H, methyl, ethyl, propyl, isopropyl, n-butyl, t-butyl, hydroxymethyl, hydroxyethyl, hydroxy isopropyl, hydroxy n-butyl and hydroxy t-butyl; with the proviso that at least one of $R_1$, $R_2$, $R_3$ and $R_4$ is a radical of formula (IV); and wherein $X^-$ is a monovalent, bivalent or trivalent ligand selected from chloride, bromide, iodide, sulphate, phosphate, hydrogen phosphate, dihydrogen phosphate, hydroxide, acetate, oxalate and citrate.

In accordance with some particular examples, the hydroxyalkylphosphonium salts of formula (II) are those wherein at least two of $R_1$, $R_2$, $R_3$ and $R_4$ are a radical of formula (IV); and wherein $R_5$ and $R_6$ are each independently selected from H, methyl, ethyl, propyl, isopropyl, n-butyl, t-butyl, hydroxymethyl, hydroxyethyl, hydroxy isopropyl, hydroxy n-butyl and hydroxy t-butyl.

From these examples, particularly the hydroxyalkylphosphonium salts of formula (II) are those wherein at least two of $R_1$, $R_2$, $R_3$ and $R_4$ are a radical of formula (IV); and wherein $R_5$ and $R_6$ are H.

In accordance with other particular examples, the hydroxyalkylphosphonium salts of formula (II) are those wherein $R_1$, $R_2$, $R_3$ and $R_4$ are a radical of formula (IV); and wherein $R_5$ and $R_6$ are each independently selected from H, methyl, ethyl, propyl, isopropyl, n-butyl, t-butyl, hydroxymethyl, hydroxyethyl, hydroxy isopropyl, hydroxy n-butyl and hydroxy t-butyl.

From these examples, particularly the hydroxyalkylphosphonium salts of formula (II) are those wherein $R_1$, $R_2$, $R_3$ and $R_4$ are a radical of formula (IV); and wherein $R_5$ and $R_6$ are H.

Examples of hydroxyalkylphosphonium salts above are tetrakis(hydroxymethyl) phosphonium chloride (THPC), tetrakis(hydroxymethyl) phosphonium sulphate (THPS), tetrakis(hydroxymethyl) phosphonium phosphate (THPP (3:1)), tetrakis(Hydroxymethyl)phosphonium monohydrogen phosphate (THPP (2:1)), tetrakis(Hydroxymethyl)phosphonium dihydrogen phosphate (THPP (1:1)), tetrakis(hydroxymethyl) phosphonium hydroxide (THPOH), tetrakis(hydroxymethyl) phosphonium oxalate (THPOx) and tetrakis(hydroxymethyl) phosphonium acetate (THPA). Particular examples of phosphonium salts are tetrakis(hydroxymethyl) phosphonium chloride (THPC) and tetrakis(hydroxymethyl) phosphonium sulphate (THPS).

In some examples of the present invention, it may be possible to use the oxidized form of the previously described hydroxyalkylphosphines; the hydroxyalkylphosphine oxide being obtainable by a process which comprises the reaction of an hydroxyalkylphosphine with an oxidant such as molecular oxygen or hydrogen peroxide, $H_2O_2$.

Therefore, in some examples of the present invention, the hydroxyalkylphosphine oxides of formula (III) are those wherein $R_1$, $R_2$ and $R_3$ are each independently selected from H, linear or branched ($C_1$-$C_6$)alkyl, ($C_3$-$C_6$)cycloalkyl, linear or branched ($C_2$-$C_6$)alkenyl, ($C_6$-$C_{12}$)aryl, ($C_7$-$C_{12}$)arylalkyl, linear or branched hydroxy($C_1$-$C_4$)alkyl, ($C_7$-$C_{12}$) alkylaryl and a radical of formula (IV); and wherein $R_5$ and $R_6$ are each independently selected from H, linear or branched ($C_1$-$C_6$)alkyl, ($C_3$-$C_6$)cycloalkyl, linear or branched ($C_2$-$C_6$)alkenyl, ($C_6$-$C_{12}$)aryl, ($C_7$-$C_{12}$)arylalkyl, linear or branched hydroxy($C_1$-$C_4$)alkyl and ($C_7$-$C_{12}$)alkylaryl; with the proviso that at least one of $R_1$, $R_2$ and $R_3$ is a radical of formula (IV).

From these examples, particularly the hydroxyalkylphosphine oxides of formula (III) are those wherein $R_1$, $R_2$ and $R_3$ are each independently selected from H, methyl, ethyl, propyl, isopropyl, n-butyl, t-butyl, hydroxymethyl, hydroxyethyl, hydroxyisopropyl, hydroxy n-butyl and hydroxy t-butyl; and wherein $R_5$ and $R_6$ are each independently selected from H, methyl, ethyl, propyl, isopropyl, n-butyl, t-butyl, hydroxymethyl, hydroxyethyl, hydroxyisopropyl, hydroxy n-butyl and hydroxy t-butyl; with the proviso that at least one of $R_1$, $R_2$ and $R_3$ is a radical of formula (IV).

In accordance with some particular examples, the hydroxyalkylphosphine oxides of formula (III) are those wherein at least two of $R_1$, $R_2$ and $R_3$ are a radical of formula (IV); and wherein $R_5$ and $R_6$ are each independently selected from H, methyl, ethyl, propyl, isopropyl, n-butyl, t-butyl, hydroxymethyl, hydroxyethyl, hydroxyisopropyl, hydroxy n-butyl and hydroxy t-butyl. From these examples, particularly the hydroxyalkylphosphine oxides of formula (III) are those wherein at least two of $R_1$, $R_2$ and $R_3$ are a radical of formula (IV); and wherein $R_5$ and $R_6$ are H.

In accordance with other particular examples, the hydroxyalkylphosphine oxides of formula (III) are those wherein $R_1$, $R_2$ and $R_3$ are a radical of formula (IV); and wherein $R_5$ and $R_6$ are each independently selected from H, methyl, ethyl, propyl, isopropyl, n-butyl, t-butyl, hydroxymethyl, hydroxyethyl, hydroxyisopropyl, hydroxy n-butyl and hydroxy t-butyl. From these examples, particularly the hydroxyalkylphosphine oxides of formula (III) are those wherein $R_1$, $R_2$ and $R_3$ are a radical of formula (IV); and wherein $R_5$ and $R_6$ are H.

An example of hydroxyalkylphosphine oxide of formula (III) above is tris(hydroxymethyl)phosphine oxide.

In accordance with some embodiments, a tetrakis(hydroxymethyl)phosphonium salt (THPX) is reacted with an aqueous or alcoholic solution of a base (MOH), e.g. KOH, then it is obtained a mixture of THP, formaldehyde, the salt KX and water. Additionally, depending on the basic conditions used, [bis(hydroxymethyl)phosphoryl]methanol (THPO, also known as tris(hydroxymethyl) phosphine oxide) may also be obtained as co-product together with THP. Further, THP and THPO may react with formaldehyde forming the corresponding hemiformals (mono-, di- and tri-substituted hemiformals of THP and THPO can be found as reaction products); also non reacted THPX may be present in the reaction media in combination with the obtained products. Therefore, the product of the reaction between THPX and a base, depending on the conditions used, may be a complex mixture of compounds bearing a phosphorus atom (THP, THPO, their corresponding hemiformals and unreacted THPX), water, the corresponding salt and formaldehyde.

Depending on the solubility of the salt MX, a precipitate may be formed, in that case the salt may be filtered out.

Chemical names of the above mentioned THP, THPX, THPO, and mono-, di- and tri-substituted hemiformals of THP and THPO (mTHP, dTHP, tTHP, mTHPO and dTHPO) are as follows:

THP: [bis(hydroxymethyl)phosphanyl]methanol;
THPO: [bis(hydroxymethyl)phosphoryl]methanol;
THPX: tetrakis(hydroxymethyl)phosphonium salt;
mTHP: {[bis(hydroxymethyl)phosphanyl]methoxy}methanol;
dTHP: {[bis(hydroxymethoxy)methyl]phosphanyl}methanol;
tTHP: ({[bis(hydroxymethoxy)methyl]phosphanyl}methoxy)methanol;
mTHPO: {[bis(hydroxymethyl)phosphoryl]methoxy}methanol;
dTHPO: {bis[(hydroxymethyl)methyl]phosphoryl}methanol;
tTHPO: ({bis[(hydroxymethyl)methyl]phosphoryl}methoxy)methanol

Therefore, in a particular embodiment, the polycondensation reaction may be preceded by the reaction of a hydroxyalkylphosphonium salt of formula (II) with an aqueous or alcoholic solution of the base to obtain a complex mixture of compounds bearing a phosphorus atom (THP, THPO, their corresponding hemiformals and unreacted THPX), water, the corresponding salt and formaldehyde. In a second step this mixture of compounds bearing a phosphorous atom b.1) is reacted with the at least one compound bearing at least one basic-nitrogen atom as defined above.

Thus, in accordance with a particular embodiment, the process comprises

(1) preparing a crude modified polymer polyol by reacting in the at least one base polyol and under polymerisation conditions

a) the at least one compound bearing at least one basic-nitrogen atom characterized by the presence in the molecule of at least one hydrogen atom attached to a nitrogen atom;
with
b) at least one compound bearing a phosphorous atom selected from the group consisting of

b.1) at least one compound or a mixture of compounds bearing a phosphorus atom comprising [bis(hydroxymethyl)phosphanyl]methanol (THP), a tetrakis(hydroxymethyl) phosphonium salt (THPX), [bis(hydroxymethyl)phosphoryl]methanol (THPO), ({[bis(hydroxymethyl)phosphanyl]methoxy}methanol (mTHP), {bis[(hydroxymethoxy)methyl]phosphanyl}methanol (dTHP), ({bis[(hydroxymethoxy)methyl]phosphanyl}methoxy)methanol (tTHP)), bis(hydroxymethyl)phosphorylmethoxymethanol (mTHPO), {bis[(hydroxymethoxy)methyl]phosphoryl}methanol (dTHPO) and ({bis[(hydroxymethoxy)methyl]phosphoryl}methoxy)methanol (tTHPO);
b.2) a mixture of condensation products resulting from the reaction of the mixture of compounds bearing a phosphorus atom b.1) as described above and at least one compound bearing at least one basic nitrogen atom as defined above; and
b.3) mixtures thereof.

In accordance with certain embodiments, the mixture of compounds bearing a phosphorus atom b.1) comprises:

I. [bis(hydroxymethyl)phosphanyl]methanol (THP) in a concentration from 0-99.9 mol%, from 20-95 mol%, from 30-90 mol%; from 35-85 mol%, from 50-75 mol% or from 60-72 mol% THP;
II. a tetrakis(hydroxymethyl) phosphonium salt (THPX) in a concentration from 0-50 mol%, from 0-30 mol%, from

0.05-15 mol%, from 0.1-10 mol%, from 0.1-7.5 mol%, from 0.2-5 mol%, or from 0,5-6.6 mol % THPX;
III. [bis(hydroxymethyl)phosphoryl]methanol (THPO) in a concentration from 0-99.9 mol%, from 0-40 mol%, from 1-15 mol%, from 2-12 mol%, or from 2-7 mol% THPO;
IV. {[bis(hydroxymethyl)phosphanyl]methoxy}methanol (mTHP) in a concentration concentration from 0-80 mol%, from 0.1-60 mol%, from 0.2-45 mol%, from 0.4-40 mol%, from 0.5-30 mol%, or from 1-25 mol% mTHP;
V. {bis[(hydroxymethoxy)methyl]phosphanyl}methanol (dTHP) in a concentration from 0-30 mol%, from 0.1-20 mol%, from 0.2-15 mol% or from 0.25-10 mol% dTHP;
VI. ({bis[(hydroxymethoxy)methyl]phosphanyl}methoxy)methanol (tTHP) in a concentration from 0-15 mol%, from 0.05-5 mol%, from 0.075-2 mol%, or from 0.1-1 mol% tTHP
VII. bis(hydroxymethyl)phosphorylmethoxymethanol (mTHPO) in a concentration from 0-20 mol%, from 0.05-10 mol%, from 0.1-6.5 mol%, from 0-6.1 mol% mTHPO;
VIII. {bis[(hydroxymethoxy)methyl]phosphoryl}methanol (dTHPO) in a concentration from 0-10 mol%, from 0.05-5 mol%, from 0.1-1 mol% dTHPO; and
IX. ({bis[(hydroxymethoxy)methyl]phosphoryl}methoxy)methanol (tTHPO) in a concentration from 0-4 mol %, from 0.01-1 mol%, from 0.05-0.2 mol% tTHPO; and
X. optionally at least one other compound bearing a phosphorus atom;

being the sum total of compounds bearing a phosphorus atom in the mixture 100 mol%

In accordance with some embodiments, the method comprises

(1) preparing a crude modified polymer polyol by reacting in the at least one base polyol and under polymerization conditions

a) at least one compound bearing at least one basic-nitrogen atom characterized by the presence in the molecule of at least one hydrogen atom attached to a nitrogen atom which is selected from melamine, trimethylol melamine, dimethylaminopropylamine, diethylenetriamine, tertiary octylamine, polyethyleneimine, those compounds of formula (V) or formula (VI) as defined above, and mixtures thereof; with
b) a mixture of condensation products b.2) resulting from the reaction of the mixture b.1) and at least one compound bearing at least one basic nitrogen atom which is selected from melamine, trimethylol melamine, dimethylaminopropylamine, diethylenetriamine, tertiary octylamine, polyethyleneimine, those compounds of formula (V) or formula (VI) as described above and mixtures thereof.

Preferably, the condensation rection is carried out at a temperature ranging from 2-140°C, preferably from 25-120°C, more preferably from 40-100°C and most preferably from 60 to 90 °C. The skilled person in the art may know how to adjust the temperature conditions in view of the compound a.1) used in the method.

<u>Base</u>

The base may be an organic or an inorganic base; preferably selected from KOH, NaOH, $Ca(OH)_2$, $Mg(OH)_2$, $Ba(OH)_2$, triethylamine ($NEt_3$), tributylamine ($NBu_3$). Alternatively, the hydroxyalkylphosphonium salt may be treated with a basic ionexchange resin. Both, strong and weak ion exchange resins are suitable for the process. Examples of strong bases would be Amberlite® IRN78 or Amberlist® A26. Examples of weak bases would be Amberlite® IRA 67, Lewatit® MP-62 and Lewatit® VP OC1065.

<u>Base polyol</u>

With regard to the base polyol used in the preparation of the modified polymer polyol dispersion and/or the polyurethane material, in accordance with one particular embodiment, optionally in combination with one or more features of the various embodiments described above or below, this base polyol may be of any suitable kind. Representative base polyols useful in the preparation of the modified polymer polyol may include any kind of polyol that is known in the art and includes those described herein and any other commercially available polyol. Representative polyols include polyether polyols, polyester polyols, polymer polyols, polyhydroxy-terminated acetal resins, hydroxyl-terminated amines, polyalkylene carbonate-based polyols, acrylic polyols, polyphosphate-based polyols, and polyols comprising a polyether carbonate polyol (POPC). Suitable polymer polyols include PDH polyols, PIPA polyols, SAN polyols, copolymer polyols and polymer polyols comprising a polyether carbonate polyol (POPC) as the base polyol. All types of other polyols like polyols derived from renewable resources (so called natural oil polyols or NOP's) can also be used pure or in mixtures as long as they have the right physic-chemical features.

In accordance with an embodiment, optionally in combination with one or more features of the various

embodiments described above or below, preferred base polyols are selected from polyether polyols, PDH polyols, PIPA polyols, SAN polyols, and polyols comprising a polyether carbonate polyol (POPC).

In accordance with an embodiment, optionally in combination with one or more features of the various embodiments described above or below, particularly preferred base polyols are selected from polyether polyols and polyesterpolyols. Polyether polyols are manufactured commercially by polymerizing propylene oxide and or ethylene oxide in the presence of hydroxyl or amino group-containing initiators and basic catalysts. Polyesterpolyols are made by the polycondensation reaction of multifunctional carboxylic acids and polyhydroxyl compounds.

Among the polyether polyols, it is possible to differentiate between reactive and non-reactive polyether polyols. Reactive polyols are ethylene oxide (EO) capped polyether polyols, having a content of polyethylene oxide terminal blocks of 5-20 wt%; so they bear a high content of primary hydroxyl group (higher than 30%); whereas non-reactive polyols are propylene oxide (PO) capped polyether polyols, bearing mainly secondary hydroxyl groups. Secondary hydroxyl groups are less reactive than primary hydroxyl groups.

In accordance with one particular embodiment, optionally in combination with one or more features of the various embodiments described above or below, the base polyol is a polyether polyol; preferably an ethylene oxide or propylene oxide capped polyether polyol; more preferably an ethylene oxide capped polyether polyol, having a proportion of terminal primary hydroxyl groups between 35 to 99.9 % as measured by NMR-13C In one particular embodiment, optionally in combination with one or more features of the various embodiments described above or below, the proportion of terminal primary hydroxyl groups of the ethylene oxide capped polyether polyol as measured by NMR-13C, is from 35 to 99.9 %, from 35 to 98 %, from 40 to 95 %, from 45 to 90 %, from 50 to 85 %, from 75 to 99 %, from 77 to 98 % or from 78 to 95 % as the base polyol. In accordance with some particular embodiments, optionally in combination with one or more features of the various embodiments described above or below, the base polyol is a polyether polyol having a content of polyethylene oxide terminal blocks of 5-20 wt%, preferably 10-19.5 wt%, preferably from 12-19 wt% and more preferably from 13-18 wt%.

In accordance with another particular embodiment, optionally in combination with one or more features of the various embodiments described above or below, the polyether polyol is a non-reactive polyether polyol, i.e. a propylene oxide (PO) capped polyether polyol.

In accordance with one particular embodiment, optionally in combination with one or more features of the various embodiments described above or below, suitable base polyols may have an OH functionality from 2 to 10, in other particular embodiments the OH functionality is from 2 to 8, more particularly from 2 to 6, even more particularly from 3 to 6. In some particular embodiments the OH functionality is 2, 3, 4, 5, 6, 7, 8, 9 or 10.

In another particular embodiment, optionally in combination with one or more features of the various embodiments described above or below, suitable base polyols may have a molecular weight (MW) in the range of 150 to 12000, particularly in the range from 200 to 11500, more particularly from 250 to 10500. In certain embodiments, optionally in combination with one or more features of the various embodiments described above or below, suitable base polyols may have a MW in the range from 300 to 4000, particularly from 350 to 2000, more particularly from 400 to 1000. In other particular embodiments, optionally in combination with one or more features of the various embodiments described above or below, the base polyols may have a MW in the range from 3000 to 12000, particularly in the range from 4500 to 12000, more particularly from 4600 to 10000, or even more particularly from 5000 to 9000. Some particular embodiments, optionally in combination with one or more features of the various embodiments described above or below, refer to base polyols having a molecular weight (MW) in the range from 400 to 3000; alternatively in certain particular embodiments the base polyols have a molecular weight in the range from 4500 to 12000.

In some embodiments, optionally in combination with one or more features of the various embodiments described above or below, the base polyols have a viscosity at 25 °C from 50 to 25000 mPa s, preferably from 65 to 9500 and more preferably from 150 to 8000 mPa s. In some embodiments, optionally in combination with one or more features of the various embodiments described above or below, the base polyols have a viscosity at 25 °C from 250 to 6500 mPa s, particularly from 400 to 2000 mPa s, from 420 to 1800 mPa s, from 450 to 1600 mPa s, from 470 to 1500 mPa s, from 50 to 1300 mPa s, from 60 to 850 mPa s at 25 °C.

In certain embodiments, optionally in combination with one or more features of the various embodiments described above or below, the hydroxyl number (iOH) of the base polyols ranges from 5 to 1800 mg KOH/g, from 5 to 1500 mg KOH/g, from 7 to 1400 mg KOH/g, from 8 to 1300 mg KOH/g, from 9 to 1200 mg KOH/g, or from 10 to 1100 mg KOH/g. In other embodiments the iOH of the base polyols ranges from 5 to 800 mg KOH/g, from 10 to 600 mg KOH/g, from 15 to 500 mg KOH/g, from 25 to 490 mg KOH/g. In certain particular embodiments the iOH of the base polyols ranges from 20 to 80 mg KOH/g, from 25 to 70 mg KOH/g, from 26 to 65 mg KOH/g or 26 to 58 mg KOH/g. Whereas in certain embodiments, the iOH of the base polyols ranges from 80 to 700 mg KOH/g, from 81 to 650 mg KOH/g, from 90 to 550 mg KOH/g, from 120 to 520 mg KOH/g. In some examples the iOH of the base polyols ranges from 28-280 mg KOH/g; in accordance with additional examples the iOH ranges from 28-56 mg KOH/g and in further examples the iOH ranges from 160-490 mg KOH/g.

It is well known in the art to use mixed polyols to vary the reactivity of the system or impart desired properties to the

resulting polyurethanes. Therefore, in accordance with an embodiment of the present disclosure, optionally in combination with one or more features of the various embodiments described above or below, mixtures of base polyols, mixtures of polymer polyols or mixtures of base and polymer polyols may also be used.

In the context of the present invention, the term "iOH" refers to the hydroxyl number (iOH), defined as the number of milligrams of potassium hydroxide required for the complete hydrolysis of the fully phthalylated derivative prepared from 1 gram of polyol. The hydroxyl number is determined according to ASTM D4274 - 16.

The term "functionality", when referring to base polyols, is used herein to indicate the number average functionality (number of hydroxyl groups per molecule) of the polyol composition, on the assumption that it is the number average functionality (number of active hydrogen atoms per molecule) of the initiator(s) used in their preparations. Although in practice the real functionality will often be somewhat less because of some terminal unsaturation, for the purpose of characterizing the base polyols, the functionality of the polyol is the functionality of the initiator(s) used for its preparation.

In the context of the present invention, the term "molecular weight" of the polyol is calculated using the following equation

$$MW\ polyol = \frac{56{,}1\ x\ functionality}{Hydroxyl\ number\ (iOH)}\ x\ 1000$$

wherein "functionality" represents the functionality of the polyol, i.e. the average number of hydroxyl groups per molecule of polyol; and hydroxyl number (iOH) is calculated according to ASTM D4274 - 16.

In the context of the present invention, the term "molecular weight" is measured by GPC.

In the context of the present invention viscosity measurements (in mPa.s) are obtained at 25 °C using a Haake™ Viscotester™ rheometer.

It is well known in the art to use mixed polyols to vary the reactivity of the system or impart desired properties to the resulting polyurethanes. Therefore, in accordance with an embodiment of the present disclosure, mixtures of base polyols, mixtures of polymer polyols or mixtures of base and polymer polyols may also be used.

<u>Compound bearing at least one basic-nitrogen atom</u>

In accordance with the present disclosure, the hydroxyalkylphosphine is reacted with at least one compound bearing at least one basic-nitrogen atom characterized by the presence in the molecule of at least one hydrogen atom attached to a nitrogen atom.

Examples of suitable compounds bearing at least one basic-nitrogen atom characterized by the presence in the molecule of at least one hydrogen atom attached to a nitrogen atom are melamine, trimethylol melamine, dimethylaminopropylamine, diethylenetriamine, tertiary octylamine, polyethyleneimine and those compounds of formula (V) or formula (VI);

wherein the compounds of formula (V) are as follows

$R_7$-$NH_2$ (V)

wherein $R_7$ is -H, -($C_1$-$C_3$)Alkyl, ($C_1$-$C_3$)Alkyl-CO-, $NH_2$-CO-, -$(CH_2)_n$-$NH_2$, -CN, -$NH_2$, -$SO_2NH_2$, cyclohexyl, phenyl, -$SO_2OH$ or -$NHCONHNH_2$; wherein n is an integer from 1-18;
and the compounds of formula (VI) are as follows:

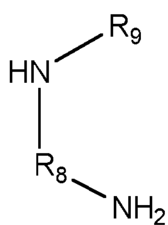

( VI )

wherein $R_8$ is selected from NH=C< and O=C<; S=C<; and $R_9$ is selected from H, -CN, -$NH_2$, -$CONH_2$, -$CONHCONH_2$, and -$CONHCONHCONH_2$.

In some examples, compounds bearing at least one basic-nitrogen atom are those of formula (V). In accordance with some particular examples, the compounds of formula (V) are those wherein $R_7$ is selected from H, methyl, -CN, $CH_3$-CO-, $NH_2$-CO-.

In some particular examples, compounds bearing at least one basic-nitrogen atom are those of formula (VI) wherein $R_8$ is selected from O=C<; S=C<; and $R_9$ es H.

Particular examples of compounds bearing at least one basic-nitrogen atom characterized by the presence in the molecule of at least one hydrogen atom attached to a nitrogen atom are $NH_3$, primary aliphatic and alicyclic amines, aliphatic and alicyclic primary and secondary polyamines and aromatic primary, secondary and tertiary amines and polyamines, for example, cyanamide, guanidine, 2-cyanoguanidine, methylamine, ethylene diamine, diethylenetriamine, hexamethylendiamine, hydrazine, tertiary octylamine, cyclohexylamine, melamine, trimethylol melamine, dimethylaminopropylamine, urea, thiourea, aniline, and polyethyleneimines. Wherein $NH_3$, melamine, cyanamide, urea, thiourea, diethylentriamine, hydrazine and ethylene diamine are particular preferred examples.

The skilled person in the art may know the method and the suitable media in order to solubilize, if necessary, the compound bearing at least one basic-nitrogen atom. Thus, for example, water may be used to solubilize the compound bearing at least one basic-nitrogen atom when necessary, such as in the case of urea.

In accordance with some embodiments, the compound bearing at least one basic-nitrogen atom is selected from:

a) melamine, trimethylol melamine, dimethylaminopropylamine, diethylenetriamine, tertiary octylamine, polyethyleneimine;
b) the compounds of formula (V) wherein R7 is selected from H, methyl, -CN, $CH_3$-CO-, $NH_2$-CO-;
c) the compounds of formula (VI) wherein R8 is selected from O=C<; S=C<; and R9 es H;
d) and mixtures thereof;

and the base polyol comprises an ethylene oxide capped polyether polyol having a content of terminal primary hydroxyl groups from 35-99.9 %, a content of polyethylene oxide terminal blocks of 5-20 wt% and a OH functionality from 2 to 8.

Reaction conditions

The reaction between the compound bearing at least one basic-nitrogen atom with the mixture b.1) or alternatively with the polycondensation mixture b.2), as defined above, may be carried out at temperatures from -40 to 200 °C, preferably from 20 to 180 °C, more preferably from 40 to 160 °C and most preferably from 60 to 140 °C

The skilled person in the art would know how to adjust the temperature and reaction time in the light of the description and examples herein described in order to complete the polycondensation reaction.

Molar ratios to be used between the phosphorus bearing compound and the compound bearing at least one basic-nitrogen atom depend on the compound bearing at least one basic-nitrogen atom functionality. The skilled person would know how to adjust the molar ratios in the light of the description and examples of the present invention in order to obtain a solid product.

The compound bearing at least one basic nitrogen atom can be added to the reactor as a solid, as a gas or dissolved in a suitable solvent. Aqueous solutions of amines are preferred.

The reaction can be carried out at atmospheric pressure, vacuum or under pressure. Besides, the reaction can be carried out under inert (nitrogen, argon) or oxidant atmosphere (air).

Stirring must be vigorous in order to guarantee the formation of particles and to avoid agglomeration of the products.

With regard to the specific conditions for carrying out the process of the invention, the skilled person would know how to adjust the parameters of each of the steps indicated above in the light of the description and examples of the present invention.

Dispersant

Different approaches to stabilise modified polymer polyols, have been proposed in the art. Thus, introduction during the polymerisation of a non-aqueous dispersant (NAD) stabiliser has been one of the proposed solutions. Stabilisation of polymeric dispersions in organic media is based on the principles of steric stabilisation, which is assured by the presence of nonaqueous dispersants (NAD) stabilisers. Thus, for example, in the case of polymer polyether polyols (graft polyols), the NAD comprises in the same chemical structure a segment with a strong affinity for the carbocatenary vinylic polymer and a second segment with a strong affinity for the liquid polyether. The NAD is linked on the surface of solid polymeric particles with the polymeric carbocatenary segment, the polyetheric chains at the exterior part of the polymeric particles situated in the continuous polyetheric media, forming a steric hinderance which prevents the agglomeration of polymer particles.

Different examples of NAD-stabilisers are known in the art. The skilled person in the art may know how to select the NAD-stabilizer which better works in each case.

Some particular examples of NAD-stabilizers known in the art which are suitable for stabilizing the modified polymer polyols are monofunctional polyetheramines having a propylene oxide content from 30 and 99 wt% is used as a dispersant in order to improve the stability of the modified polymeric polyols.

According to certain embodiments, optionally in combination with one or more features of the various embodiments described above or below, the dispersant is selected from a monofunctional polyetheramine having a propylene oxide content from 30 and 99 wt%, from 35 and 98 wt%, from 40 and 97 wt%, from 45 and 96 wt%, from 50 and 95 wt%.

In certain particular embodiments, optionally in combination with one or more features of the various embodiments described above or below, the monofunctional polyetheramine has a propylene oxide content from 75 and 99 wt%, particularly from 80 and 90 wt%, more particularly from 82 and 88 wt%.

In certain embodiments, optionally in combination with one or more features of the various embodiments described above or below, the monofunctional polyetheramines has an average molecular weight of from 400 to 2500, in particular embodiments ranges from 450 to 2200, and more particularly from 600 to 2000.

In another particular embodiments, optionally in combination with one or more features of the various embodiments described above or below, the monofunctional polyetheramines has a PO:EO (propylene oxide:ethylene oxide) mol ratio of from 3:1 to 20:1, more particularly from 4.5:1 to 12:1. In certain particular embodiments the monofunctional polyetheramines has a PO:EO ratio of 9:1 and an average molecular weight of 600; in another suitable embodiments have a PO:EO ratio of 29:6 and an average molecular weight of 2000.

Some particular examples of monofunctional polyetheramines are available under the tradename Jeffamine® (M series) from Huntsman.

In a particular embodiment, optionally in combination with one or more features of the various embodiments described above or below, the NAD-stabilisers are alkoxysilane-capped polyether polyols as those described in EP3838962.

Thus, in accordance with an embodiment, optionally in combination with one or more features of the various embodiments described above or below, the NAD-stabilisers are alkoxysilane-capped polyether polyols having

- from 1 to 8 hydroxyl groups per molecule, preferably from 2 to 7, more preferably from 3 to 6 and still more preferably from 4 to 5 hydroxyl groups per molecule; and
- from 1 to 2, preferably 1, alkoxysilane groups per molecule;

obtainable by a process comprising

capping from 1 to 2 of the terminal hydroxyl groups of a polyether polyol

- having a functionality from 2 to 10, preferably from 2-8, more preferably from 3-7; and still more preferably from 3-6 and a weight-average molecular weight from 2000 to 25000, determined according to the method identified in the specification, preferably from 6000 to 20000, more preferably from 8000 to 15000, and still more preferably from 11000 to 14000,

with
a capping agent which is a compound of a formula (VII) having at least one alkoxysilane terminal group and at least one hydroxyl-reactive group;
wherein the reaction of the capping agent of formula (VII) with the polyether polyol is carried out in a molar ratio from 0.05 to 2.0 mole of capping agent per mole of polyether polyol; wherein

the at least a compound of formula (VII) is of formula:

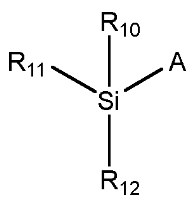

(VII)

wherein $R_{10}$, $R_{11}$ and $R_{12}$ are each independently selected from linear or branched (C1-C6)alkyl radical, linear or

branched (C1-C6)alkoxyl radical and tri(C1-C3)alkylsilyloxyl radical; with the proviso that at least one of $R_{10}$, $R_{11}$ or $R_{12}$ is a (C1-C6)alkoxyl radical; and wherein A is selected from the group consisting of those compounds of formula (VIII), (IX), (X), (XI) and (XII)

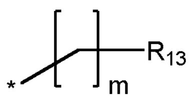

(VIII)

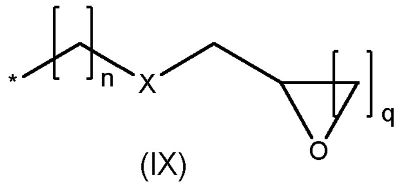

(IX)

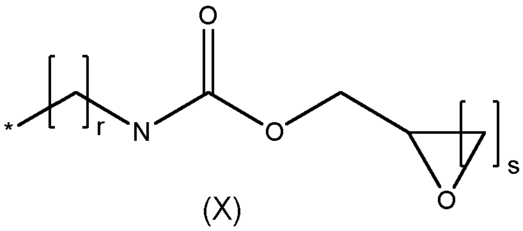

(X)

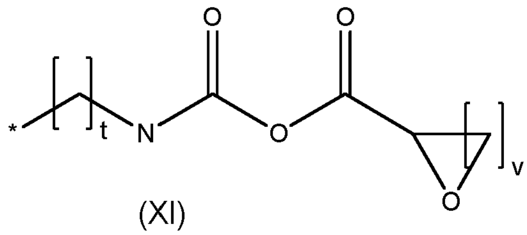

(XI)

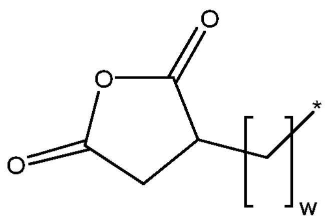

(XII)

wherein

the wavy line means the point of attachment to the Si atom in formula (VII); m, n, p, r, t and w are independently an integer selected from 1 to 6; q, s and v are independently an integer selected from 1 to 4; $R_{13}$ is a radical selected from -NCO,

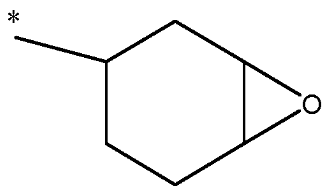

and

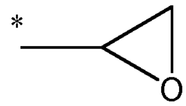

wherein the asterisk indicates the point of attachment to the rest of the group X is selected from -O- and -N($R_{14}$)-; wherein $R_{14}$ is a radical selected from H, linear or branched (C1-C6)alkyl,

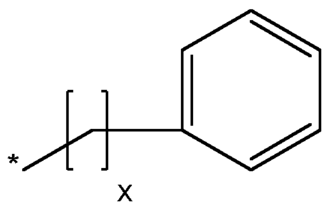

and

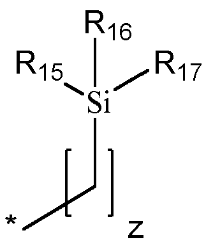

wherein the asterisk indicates the point of attachment to the N atom;
x and z are independently an integer selected from 1 to 6;
and $R_{15}$, $R_{16}$ and $R_{17}$ are each independently selected from linear or branched (C1-C6)alkyl radical, linear or

branched (C1-C6)alkoxyl radical and tri(C1-C3)alkylsilyloxyl radical; with the proviso that at least one of $R_{15}$, $R_{16}$ or $R_{17}$ is a (C1-C6)alkoxyl radical or a tri(C1-C3)alkylsilyloxyl radical.

In accordance with particular embodiments, optionally in combination with one or more features of the various embodiments described above or below, such polyether polyol has a hydroxyl number in the range 20-600 mg KOH/g, preferably 28-380 mg KOH/g, more preferably 28-80 mg KOH/g.

In accordance with particular embodiments, optionally in combination with one or more features of the various embodiments described above or below, such polyether polyol has a viscosity at 25 °C from 50 to 12500 mPa s, preferably from 200 to 8000 mPa s, more preferably from 450 to 5000 mPa s and still more preferably from 500 to 2000 mPa s.

In accordance with certain particular embodiments, optionally in combination with one or more features of the various embodiments described above or below, the polyether polyol is a polyether polyol having a functionality between 3-6; an average molecular weight from 6000 to 20000 and a viscosity at 25 °C from 200 to 8000 mPa s.

In accordance with particular embodiments, optionally in combination with one or more features of the various embodiments described above or below, such polyether polyol has a hydroxyl number in the range 20-600 mg KOH/g, preferably 28-380 mg KOH/g, more preferably 28-80 mg KOH/g.

In accordance with particular embodiments, optionally in combination with one or more features of the various embodiments described above or below, such polyether polyol has a viscosity at 25 °C from 50 to 12500 mPa s, preferably from 200 to 8000 mPa s, more preferably from 450 to 5000 mPa s and still more preferably from 500 to 2000 mPa s.

In accordance with certain particular embodiments, optionally in combination with one or more features of the various embodiments described above or below, the polyether polyol is a polyether polyol having a functionality between 3-6; an average molecular weight from 6000 to 20000 and a viscosity at 25 °C from 200 to 8000 mPa s.

In accordance with certain embodiments, optionally in combination with one or more features of the various embodiments described above or below, the compounds of formula (VII) are those wherein at least $R_{10}$, $R_{11}$ and $R_{12}$ are each independently selected from $CH_3$-O-, $CH_3CH_2$-O-, $CH_3CH_2CH_2$-O-, $(CH_3)_2$CH-O-, $CH_3CH_2CH_2CH_2$-O-, $(CH_3)_3$CH-O-, $(CH_3)_2CHCH_2$-O-, $CH_3$-, $CH_3CH_2$-, $CH_3CH_2CH_2$-, $(CH_3)_2$CH-, $CH_3CH_2CH_2CH_2$-, $(CH_3)_3$CH-, $(CH_3)_2CHCH_2$-, $(CH_3)_3$Si-O-, and $(CH_3CH_2)_3$Si-O-; with the proviso that at least one of $R_{10}$, $R_{11}$ or $R_{12}$ is a (C1-C3)alkoxyl radical.

In some particular embodiments, optionally in combination with one or more features of the various embodiments described above or below, the compounds of formula (VII) are those wherein $R_{10}$, $R_{11}$ and $R_{12}$ are each independently selected from $CH_3$-O-, $CH_3CH_2$-O-, $CH_3$-, $CH_3CH_2$-, and $(CH_3)_3$Si-O-; with the proviso that at least one of $R_{10}$, $R_{11}$ or $R_{12}$ is selected from $CH_3$-O-, and $CH_3CH_2$-O-.

In accordance with one embodiment of the present invention, optionally in combination with one or more features of the various embodiments described above or below, the compounds of formula (VII) are selected from

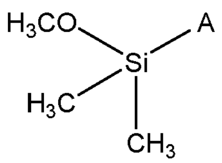
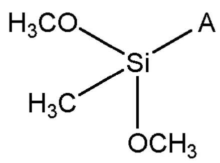
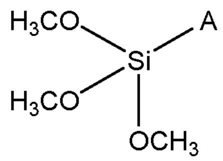
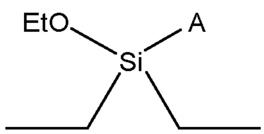
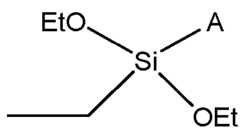
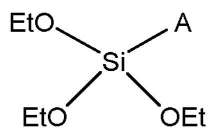

In certain embodiments, optionally in combination with one or more features of the various embodiments described above or below, the radical A is selected from those compounds of formula (VIII) as described above.

In one embodiment, optionally in combination with one or more features of the various embodiments described above or below, the radical A is selected from those compounds of formula (VIII) wherein m is an integer from 1 to 6; particularly 1, 2, 3, 4, 5 or 6; more particularly 2 or 3; and $R_{13}$ is -NCO,

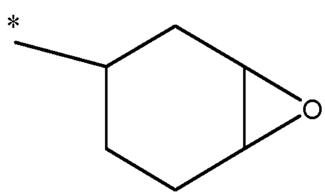
and
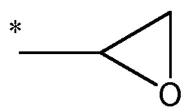

wherein the asterisk indicates the point of attachment to the rest of group; and wherein the capping reaction is carried out in a molar ratio from 0.05 to 2.0 mole, preferably from 0.2 to 1.8 mole, more preferably from 0.50 to 1.5 mole, being particularly preferably from 0.8 to 1.2 mole of capping agent per mole of polyether polyol.

In accordance with a particular embodiment, optionally in combination with one or more features of the various embodiments described above or below, the compound of formula (VII) is selected from (3-isocyanatopropyl)trimethoxysilane (also known as 3-(trimethoxysilyl)propyl isocyanate), (3-isocyanatopropyl)dimethoxy(methyl)silane, (3-isocyanatopropyl)(methoxy)dimethylsilane, (3-isocyanatopropyl)dimethoxy ethylsilane, diethyl(3-isocyanatopropyl)methoxysilane, (3-isocyanatopropyl)triethoxysilane (also known as 3-(triethoxysilyl)propyl isocyanate), diethoxy(3-isocyanatopropyl)methylsilane, ethoxy(3-isocyanatopropyl)dimethylsilane, (3-isocyanatopropyl)diethoxy(ethyl)silane, ethoxydiethyl(3-isocyanatopropyl)silane, trimethoxy(2-isocyanatoethyl)silane, (2-isocyanatoethyl)dimethoxy(methyl)silane, (2-isocyanatoethyl)(methoxy)dimethylsilane, ethyl(2-isocyanatoethyl)dimethoxysilane, diethyl(2-isocyanatoethyl)methoxysilane, triethoxy(2-isocyanatoethyl)silane, diethoxy(2-isocyanatoethyl)methylsilane, ethoxy(2-isocyanatoethyl)dimethylsilane, diethoxy(ethyl)(2-isocyanatoethyl)silane, ethoxydiethyl(2-isocyanatoethyl)silane, triethoxy(isocyanatomethyl)silane, (isocyanatomethyl)trimethoxysilane, trimethoxy({7-oxabicyclo[4.1.0]heptan-3-yl}methyl)silane, triethoxy({7-oxabicyclo[4.1.0]heptan-3-yl}methyl)silane, trimethoxy(2-{7-oxabicyclo[4.1.0]heptan-3-yl}ethyl)silane, diethoxy(methyl)(2-{7-oxabicyclo[4.1.0]heptan-3-yl}ethyl)silane, triethoxy(2-{7-oxabicyclo[4.1.0]heptan-3-yl}ethyl)silane, triethoxy(3-{7-oxabicyclo[4.1.0]heptan-3-yl}propyl)silane, trimethoxy(3-{7-oxabicyclo[4.1.0]heptan-3-yl}propyl)silane, triethoxy(4-{7-oxabicyclo[4.1.0]heptan-3-yl}butyl)silane, and trimethoxy(4-{7-oxabicyclo[4.1.0]heptan-3-yl}butyl) silane.

In certain embodiments, optionally in combination with one or more features of the various embodiments described above or below, the radical A is selected from those compounds of formula (IX) as described above. In one embodiment, optionally in combination with one or more features of the various embodiments described above or below, the radical A is selected from those compounds of formula (IX) wherein

n and p are independently an integer selected from 1 to 6; particularly 1, 2, 3, 4, 5 or 6; more particularly 2, 3 or 4; and q is an integer selected from 1 to 4; particularly 1, 2, 3 or 4, more particularly 1 or 3.

In accordance with one particular embodiment, optionally in combination with one or more features of the various embodiments described above or below, the radical A is selected from those compounds of formula (IX) wherein

n and p are independently an integer selected from 1, 2, 3, or 4;
q is an integer selected from 1 or 3;
X is selected from -O- and $-N(R_{14})-$;
wherein $R_{14}$ is a radical selected from H, linear or branched (C1-C6)alkyl,

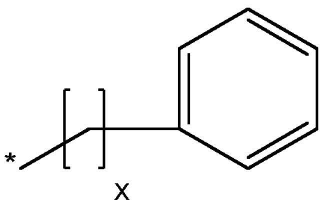

and

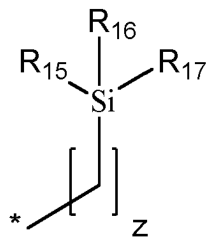

wherein the asterisk indicates the point of attachment to the N atom;
x and z are independently an integer selected from 1 to 6;
and $R_{15}$, $R_{16}$ and $R_{17}$ are each independently selected from $-CH_3$, $-CH_2CH_3$, $-OCH_3$, $-OCH_2CH_3$, $-O-Si(CH_3)_3$, and $-O-Si(CH_2CH_3)_3$; and
wherein the capping reaction is carried out in a molar ratio from 0.05 to 2.0 mole, preferably from 0.2 to 1.8 mole, more preferably from 0.50 to 1.5 mole, being particularly preferably from 0.8 to 1.2 mole of capping agent per mole of polyether polyol.

In accordance with a particular embodiment, optionally in combination with one or more features of the various embodiments described above or below, the compound of formula (VII) is selected from trimethoxy({3-[(oxiran-2-yl) methoxy]propyl})silane (also known as glycidoxypropyl-trimethoxysilane), dimethoxy(methyl){3-[(oxiran-2-yl)methoxy] propyl}silane, methoxydimethyl{3-[(oxiran-2-yl)methoxy]propyl}silane, dimethoxy(ethyl){3-[(oxiran-2-yl)methoxy]propyl} silane, diethyl(methoxy){3-[(oxiran-2-yl)methoxy]propyl}silane, triethoxy({3-[(oxiran-2-yl)methoxy]propyl}) silane (also known as glycidoxypropyltriethoxysilane), diethoxy(methyl){3-[(oxiran-2-yl)methoxy]propyl}silane, ethoxydimethyl{3-[(oxiran-2-yl)methoxy]propyl}silane, diethoxy-ethyl-[3-(oxiran-2-ylmethoxy)propyl]silane, ethoxydiethyl{3-[(oxiran-2-yl)methoxy]propyl}silane, trimethoxy({2-[(oxiran-2-yl)methoxy]ethyl})silane, dimethoxy(methyl){2-[(oxiran-2-yl)methoxy]ethyl}silane, methoxydimethyl{2-[(oxiran-2-yl)methoxy]ethyl}silane, ethyldimethoxy{2-[(oxiran-2-yl)methoxy]ethyl}silane, diethyl(methoxy){2-[(oxiran-2-yl)methoxy]ethyl}silane, triethoxy({2-[(oxiran-2-yl)methoxy]ethyl})silane, diethoxy(methyl){2-[(oxiran-2-yl)methoxy]ethyl}silane, ethoxydimethyl{2-[(oxiran-2-yl)methoxy]ethyl}silane, diethoxy(ethyl){2-[(oxiran-2-yl)methoxy]ethyl}silane, diethoxy(ethyl){2-[(oxiran-2-yl)methoxy]ethyl}silane, trimethoxy({[(oxiran-2-yl)methoxy]methyl})silane, dimethoxy(methyl){[(oxiran-2-yl)methoxy]methyl}silane, methoxydimethyl{[(oxiran-2-yl)methoxy]methyl}silane, ethyldimethoxy{[(oxiran-2-yl)methoxy]methyl}silane, diethyl(methoxy){[(oxiran-2-yl)methoxy]methyl}silane, triethoxy({[(oxiran-2-yl)methoxy]methyl})silane, diethoxy(methyl){[(oxiran-2-yl)methoxy]methyl}silane, ethoxydimethyl{[(oxiran-2-yl)methoxy]methyl}silane, diethoxy(ethyl){[(oxiran-2-yl)methoxy]methyl}silane, ethoxydiethyl{[(oxiran-2-yl)methoxy]methyl}silane, butyl[(oxiran-2-yl)methyl][3-(trimethoxysilyl)propyl]amine, butyl[(oxiran-2-yl)methyl][3-(triethoxysilyl)propyl]amine, ethyl[(oxiran-2-yl)methyl][3-(trimethoxysilyl)propyl]amine, ethyl[(oxiran-2-yl)methyl][3-(triethoxysilyl)propyl]amine, methyl[(oxiran-2-yl)methyl][3-(trimethoxysilyl)propyl]amine, methyl[(oxiran-2-yl)methyl][3-(triethoxysilyl)propyl]amine, N-[(oxiran-2-yl)methyl]-N-[3-(trimethoxysilyl)propyl]aniline, N-[(oxiran-2-yl)methyl]-N-[3-(triethoxysilyl)propyl]aniline, N-[(oxiran-2-yl)methyl]-N-[(trimethoxysilyl)methyl]aniline, N-[(oxiran-2-yl)methyl]-N-[(triethoxysilyl)methyl]aniline, methyl[(oxiran-2-yl)methyl][(trimethoxysilyl)methyl]amine, methyl[(oxiran-2-yl)methyl][(triethoxysilyl)methyl]amine 3-(trimethoxysilyl)-N-(3-(trimethoxysilyl)propyl)-N-((oxiran-2-yl)methyl)propan-1-amine, 3-(triethoxysilyl)-N-(3-(triethoxysilyl)propyl)-N-((oxiran-2-yl)methyl)propan-1-amine and N,N-bis((trimethoxysilyl)methyl)(oxiran-2-yl)methanamine, and N, N-bis((triethoxysilyl)methyl)(oxiran-2-yl)methanamine.

In certain embodiments, optionally in combination with one or more features of the various embodiments described above or below, the radical A is selected from those compounds of formula (X) or (XI) as described above. In one embodiment, optionally in combination with one or more features of the various embodiments described above or below, the radical A is selected from those compounds of formula (X) or (XI) wherein

r and t are independently an integer selected from 1, 2, 3, or 4; and s is an integer selected from 1 to 3;
and wherein the capping reaction is carried out in a molar ratio from 0.05 to 2.0 mole, preferably from 0.2 to 1.8 mole, more preferably from 0.50 to 1.5 mole, being particularly preferably from 0.8 to 1.2 mole of capping agent per mole of polyether polyol.

In accordance with a particular embodiment, optionally in combination with one or more features of the various embodiments described above or below, the compound of formula (VII) is selected from (oxiran-2-yl)methyl N-[3-(trimethoxysilyl)propyl]carbamate, (oxiran-2-yl)methyl-N-[3-(triethoxysilyl)propyl]carbamate, (oxiran-2-yl)methyl-N-[4-(trimethoxysilyl)butyl]carbamate, (oxiran-2-yl)methyl-N-[4-(triethoxysilyl)butyl]carbamate, (oxiran-2-yl)methyl-N-[2-(trimethoxysilyl)ethyl]carbamate, (oxiran-2-yl)methyl-N-[2-(triethoxysilyl)ethyl]carbamate, (oxiran-2-yl)methyl-N-[(trimethoxysilyl)methyl]carbamate, (oxiran-2-yl)methyl-N--[(triethoxysilyl)methyl]carbamate, 3-trimethoxysilylpropylcarbamoyl oxirane-2-carboxylate, 3-triethoxysilylpropylcarbamoyl oxirane-2-carboxylate, oxirane-2-carbonyl-N-[(trimethoxysilyl)methyl]carbamate, oxirane-2-carbonyl-N-[(triethoxysilyl)methyl]carbamate, oxirane-2-carbonyl-N-[4-(trimethoxysilyl)butyl]carbamate and oxirane-2-carbonyl-N-[4-(triethoxysilyl)butyl]carbamate

In certain embodiments, optionally in combination with one or more features of the various embodiments described above or below, the radical A is selected from those compounds of formula (XII) as described above.

In one embodiment, optionally in combination with one or more features of the various embodiments described above or below, the radical A is selected from those compounds of formula (XII) wherein

w is an integer selected from 1, 2, 3, or 4; particularly 2, 3 or 4;
and wherein the capping reaction is carried out in a molar ratio from 0.05 to 2.0 mole, preferably from 0.2 to 1.8 mole, more preferably from 0.50 to 1.5 mole, being particularly preferably from 0.8 to 1.2 mole of capping agent per mole of polyether polyol.

In accordance with a particular embodiment, optionally in combination with one or more features of the various embodiments described above or below, the compound of formula (VII) is selected from 3-[3-(triethoxysilyl)propyl]oxolane-2,5-dione and 3-[3-(trimethoxysilyl)propyl]oxolane-2,5-dione.

Therefore, in some embodiments of the present invention, the preparation of the crude modified polymer polyol takes place in a liquid polyol mixture, which comprises a mixture of the at least one base polyol with at least one NAD-stabiliser compound, preferably the at least one NAD-stabiliser compound is at least one alkoxysilane-capped polyether polyol as described above or a monofunctional polyetheramine as described above.

According to certain embodiments, optionally in combination with one or more features of the various embodiments described above or below, the dispersant (NAD-stabilizer) is present in the liquid polyol mixture in a concentration with respect to the total of the liquid polyol mixture ranging from 0.1 wt% to 40 wt%, from 0.3 wt% to 30 wt%, from 0.5 wt% to

25 wt%, from 1 wt% to 10 wt%, from 2 to 5 wt%.

Thus, in accordance with some embodiments, the process for the preparation of a modified polymer polyol according to the present invention comprises mixing at least one base polyol with at least one NAD-stabiliser compound to obtain at least one liquid polyol mixture, preferably the at least one NAD-stabiliser compound is at least one alkoxysilane-capped polyether polyol as described above; and then

(1) preparing a crude modified polymer polyol by reacting in the at least one liquid polyol mixture and under polymerisation conditions

a. the at least one compound bearing at least one basic-nitrogen atom characterized by the presence in the molecule of at least one hydrogen atom attached to a nitrogen atom and is selected from melamine, trimethylol melamine, dimethylaminopropylamine, diethylenetriamine, tertiary octylamine, polyethyleneimine, the compounds of formula (V) or formula (VI) as defined above and mixtures thereof; and
b. the mixture of compounds bearing a phosphorus atom b.1), the mixture of condensation products b.2), or de mixture thereof b.3), as defined above;

and wherein the process further comprises
(2) purifying the crude modified polymer polyol obtained in (1) by stripping under reduced pressure, preferably ranging from 0.1 mbar to 500 mbar, wherein the stripping step is carried out by introducing a stripping medium selected from an inert gas, stream or air, into the reactor chamber or into a stripping column wherein the crude modified polymer polyol has been transferred, whereby the stripping medium at least partially removes a solid comprising a complex mixture of compounds comprising the unreacted compounds bearing at least one basic-nitrogen atom and reaction sub-products; and
(3) recovering the purified modified polymer polyol.

In certain embodiments, the process comprises

(1) preparing the polymeric particles by adding to the base polyol or alternatively to the liquid polyol mixture which comprises at least one base polyol and at least one NAD-stabiliser compound, simultaneously or sequentially in any order

a) the at least one compound bearing at least one basic-nitrogen atom characterized by the presence in the molecule of at least one hydrogen atom attached to a nitrogen atom and is selected from melamine, trimethylol melamine, dimethylaminopropylamine, diethylenetriamine, tertiary octylamine, polyethyleneimine, the compounds of formula (V) or formula (VI) as defined above and mixtures thereof; and
b) the mixture of compounds bearing a phosphorus atom b.1), the mixture of condensation products b.2), or de mixture thereof b.3), as defined above;

and wherein the process further comprises
(2) purifying the crude modified polymer polyol obtained in (1) by stripping under reduced pressure, preferably ranging from 0.1 mbar to 500 mbar, wherein the stripping step is carried out by introducing a stripping medium selected from an inert gas, stream or air, into the reactor chamber or into a stripping column wherein the crude modified polymer polyol has been transferred, whereby the stripping medium at least partially removes a solid comprising a complex mixture of compounds comprising the unreacted compounds bearing at least one basic-nitrogen atom and reaction sub-products; and
(3) recovering the purified modified polymer polyol.

In accordance with some embodiments, the process comprises:

i. mixing at least one tetrakis(hydroxymethyl) phosphonium salt (THPX) with an aqueous or alcoholic solution of a base, preferably at a temperature ranging from 0 to 60 °C;
ii. optionally filtering out the resulting solution;
iii. distilling off the solvent and volatiles, in particular formaldehyde, thus obtaining the mixture b.1) of compounds bearing a phosphorus atom as defined above;
iv. optionally filtering out the resulting solution;
v. optionally oxidizing the product obtained in iii or the solution obtained in iv, wherein the oxidation may be done by simply thermal treatment in air atmosphere or by the use of oxidants as, for example, water peroxide, thus obtaining the mixture b.1) with a high content of oxidized components;

(1) preparing the polymeric particles in the presence of the base polyol or alternatively the liquid polyol mixture which comprises at least one base polyol and at least one NAD-stabiliser compound by the reaction resulting from adding to the base polyol or the liquid polyol mixture, simultaneously or sequentially in any order

a) the at least one compound bearing at least one basic-nitrogen atom a.1) characterized by the presence in the molecule of at least one hydrogen atom attached to a nitrogen atom and is selected from melamine, trimethylol melamine, dimethylaminopropylamine, diethylenetriamine, tertiary octylamine, polyethyleneimine, the compounds of formula (V) or formula (VI) as defined above and mixtures thereof; and
b) the mixture of compounds bearing a phosphorus atom b.1) obtained in iii, the filtered solution obtained in iv, the oxidized mixture obtained in v, or mixtures thereof;

and wherein the process further comprises
(2) purifying the crude modified polymer polyol obtained in (1) by stripping under reduced pressure, preferably ranging from 0.1 mbar to 500 mbar, wherein the stripping step is carried out by introducing a stripping medium selected from an inert gas, stream or air, into the reactor chamber or into a stripping column wherein the crude modified polymer polyol has been transferred, whereby the stripping medium at least partially removes a solid comprising a complex mixture of compounds comprising the unreacted compounds bearing at least one basic-nitrogen atom and reaction sub-products; and
(3) recovering the purified modified polymer polyol.

The above-mentioned distillation step iii., is used to remove solvent and volatile components, such as water, and formaldehyde present in the reaction media.
Thus, in accordance with some embodiments, the process, previously to step (1) the process further comprises:

i) mixing at least one hydroxyalkylphosphonium salt of formula (II) with an aqueous or alcoholic solution of a base;
ii) optionally filtering out the resulting solution;
iii) distilling off the solvent and volatiles, thus obtaining the mixture b.1) of compounds bearing a phosphorus atom;
iv) optionally filtering out the resulting solution;
v) optionally reacting the mixture of compounds bearing a phosphorus atom b.1) and at least one compound bearing at least one basic nitrogen atom as defined in claim 1 to obtain a mixture b.2) of condensation products bearing a phosphorus atom;
vi) optionally oxidizing the mixture of compounds obtained in iii), the solution obtained in iv), or the mixture of condensation products obtained in v);

wherein the mixture b.1) of compounds bearing a phosphorus atom obtained in iii) comprises [bis(hydroxymethyl) phosphanyl]methanol (THP), a tetrakis(hydroxymethyl) phosphonium salt (THPX), [bis(hydroxymethyl)phosphoryl] methanol (THPO), ({[bis(hydroxymethyl)phosphanyl]methoxy}methanol (mTHP), {bis[(hydroxymethoxy)methyl]phosphanyl}methanol (dTHP), ({bis[(hydroxymethoxy)methyl]phosphanyl}methoxy)methanol (tTHP)), bis(hydroxymethyl) phosphorylmethoxymethanol (mTHPO), {bis[(hydroxymethoxy)methyl]phosphoryl}methanol (dTHPO) and ({bis[(hydroxymethoxy)methyl]phosphoryl}methoxy)methanol (tTHPO).
In accordance with some embodiments, the process, previously to step (2), once the polycondensation reaction has been carried out, further comprises distilling out volatile compounds present in the reaction media.
In some particular embodiments, volatile compounds present in the crude modified polymer polyol obtained in (1) may be removed by distilling out.
Again, this distillation step, which is carried out before step (2), is used to remove solvents and volatile components, such as water, and formaldehyde present in the reaction media.
The process of the present invention is characterized by performing a purifying step of the crude modified polymer polyol obtained in step (1) as described herein. Such purifying step may be carried out by stripping under reduced pressure.
"Stripping" is a physical separation process known to those skilled in the art which is used in many fields in the prior art for purifying liquids, by removing solute(s) from a loaded solvent or extract (c.f. IUPAC Gold Book https://doi.org/10.1351/goldbook). As is well known in the art, stripping process uses the principles of absorption, wherein a gas phase, i.e. an inert gas, stream or air, is contacted with a phase to be purified at reduced pressure of less than 500 mbar with or without countercurrent flow. In accordance with the invention, this contacting may occur in the reactor chamber or in a stripping column wherein the crude modified polymer polyol obtained in step (1) has been transferred.
In accordance with some embodiments, the stripping gas, which may be selected from an inert gas, stream or air, is used in countercurrent flow, which means that, in order to assist the stripping, the stripping gas may be introduced into the column in countercurrent flow to the crude product, provided the pressure remains less than 500 mbar.

In accordance with some embodiments of the present invention, the stripping step (2) according to the invention is conducted at a reduced pressure of less than 500 mbar, preferably in the range of 0.1-500 mbar, more preferably in the range of 10-350 mbar, even more preferably in the range of 20-250 mbar.

The temperature of the stripping can be adjusted by setting an appropriate negative pressure in the column in a routine manner by those skilled in the art. It is preferred that a temperature of 180 degrees centigrade or less, preferably between 140 °C and 180 °C, more preferably between 150°C and 160°C, is maintained during the stripping.

Without being bounded by theory, the solid removed comprises a complex mixture of compounds comprising the unreacted compounds bearing at least one basic-nitrogen atom and reaction byproducts, such as formaldehyde and different oligomers formed as a reaction sub-products. Therefore, a pure product is then obtained in step (2) according to the invention which, compared to the crude modified polymer polyol obtained in (1), has a reduced content of compounds comprising the unreacted compounds bearing at least one basic-nitrogen atom and reaction sub-products.

In accordance with a particular embodiment, the stripping step may be carried out by bubbling and inert gas, stream, or air into the reactor chamber or into the stripping column wherein the crude modified polymer polyol has been transferred, removing the solid from the polyol which is captured in a cold trap, and recovering the purified modified polymer polyol.

Alternative known methods, as for example thin film or falling film evaporation, of removing such solid comprising a complex mixture of compounds comprising the unreacted compounds bearing at least one basic-nitrogen atom and reaction sub-products may also be applied instead of a stripping process. Additional examples of alternative methods are known by the skilled in the art.

In accordance with a particular embodiment of the present disclosure, the polymeric particles dispersed in the at least one base polyol, may be further oxidized using suitable oxidizing agents such as manganate, permanganate, peroxides and molecular oxygen; preferably the oxidizing agent is molecular oxygen and/or hydrogen peroxide.

The oxidation step is performed by introducing at least one oxidizing agent in the media once the polycondensation reaction has occurred. If hydrogen peroxide is used as oxidating agent, this one may be added in aqueous solution to the modified polymer polyol containing the stable dispersion of polymeric particles in the base polyol. If molecular oxygen is used as the oxidant, the oxidation may be done bubbling air into the system once the polymeric particles are formed.

The modified polymeric polyols of the present disclosure are useful for the preparation of polyurethane materials such as polyurethane and polyisocyanurate foams, adhesives, elastomers, sealants and coatings; being preferred those with flame retardant properties.

The modified polymer polyols of the present invention, due to the presence of the dispersed polymeric particles with high content of P and N, provide flame retardancy properties to the polyurethane derived from its use. Besides, the presence of the dispersed polymeric particles with high content of P and N will provide enhanced oxidative, thermal and UV stability to the polyurethane derived from its use. This enhanced stability is especially useful for polyurethane foams in which scorching and discoloration will be reduced.

In the context of the present disclosure, the term "percentage (wt %) by weight" refers to the percentage of each ingredient of the combination or composition in relation to the total weight.

All the embodiments of the process of the present disclosure contemplate all the combinations providing all the embodiments of the extract of the invention and combinations thereof.

The modified polymer polyol "obtainable by" the process of the invention is used here to define the modified polymer polyol by the process for obtaining it and refers to the product obtainable by the preparation as defined herein. For the purposes of the invention the expressions "obtainable", "obtained" and equivalent expressions are used interchangeably, and in any case, the expression "obtainable" encompasses the expression "obtained".

For the purposes of the invention, any ranges given include both the lower and the upper end-points of the range. Ranges given, such as concentrations, temperatures, times, sizes, and the like, should be considered approximate, unless specifically stated.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples but should be determined only by a fair reading of the claims that follow.

Reference signs related to drawings and placed in parentheses in a claim, are solely for attempting to increase the intelligibility of the claim and shall not be construed as limiting the scope of the claim.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples are provided by way of illustration, and they are not intended to be limiting of the present invention. Furthermore, the present invention covers all possible combinations of particular and preferred embodiments described herein.

## EXAMPLES

The following materials were used:

- Polyol A - A sorbitol (functionality 6) initiated polyether polyol (PO/EO) with a hydroxyl number of 29.5 mgKOH/g, a content of polyethylene oxide terminal blocks of 16.2 wt%, a 81 % of primary OH groups and a viscosity at 25 °C of 1500 mPa s
- Polyol B - A glycerol (functionality 3) initiated polyether polyol (PO/EO) with a hydroxyl number of 48 mgKOH/g, a content of polyethylene units, randomly distributed along the central backbone of the polyol, of 12 wt% and a viscosity at 25 °C of 560 mPa s.
- Polyol C - A glycerol (functionality 3) initiated polyether polyol (PO) with a hydroxyl number of 56 mgKOH/g and a viscosity at 25 °C of 470 mPa s.
- Polyol D - A glycerol (functionality 3) initiated polyether polyol (PO) with a hydroxyl number of 250 mg KOH/g and a viscosity at 25 °C of 260 mPa s.
- STEPANPOL PS 2352 is a modified aromatic polyester polyol available from Stepanpol with a hydroxyl number of 240 mgKOH/g and a viscosity at 25 °C of 3016 Cps.
- THPS - Tetrakis(hydroxymethyl)phosphonium sulphate salt (70-75 wt% in water). Available from Sigma Aldrich.
- KOH - Potassium hydroxide (≥85 %). Available from Sigma Aldrich.
- Tetrafluoroboric acid solution (48 %). Available from Sigma Aldrich.
- Trimethoxy({3-[(oxiran-2-yl)methoxy]propyl})silane (also known as glycidoxypropyl-trimethoxysilane) (97 %). Available from Acros Organics.
- UR - Urea (98 %). Available from Sigma Aldrich.
- Melamine. Available from BASF.
- Kosmos®-29 - Tin Octoate available from Evonik Industries.
- Tegoamin® BDE - Solution of 70 % Bis(2-dimethylaminoethyl)ether in dipropyleneglycol available from Evonik Industries.
- Dabco® K-15 - Potassium octoate 70 % in diethylen glycol. Available from Evonik Industries.
- Polycat® 5 - Pentamethyldiethylenetriamine. Available from Evonik Industries.
- TEGOSTAB® B 84205 - non-hydrolysable polyether polydimethylsiloxane copolymer. Available from Evonik Industries.
- Niax L-620LV - Silicone surfactant for polyurethane foam available from Momentive.
- TCPP - Tris (chloroisopropyl) phosphate. Available from Shekoy chemicals.
- TDI-80 - Toluene diisocyanate (80/20). Available from Borsodchem.
- TDI 65 - Toulene diisocyanate (65/35). Available from Borsodchem.
- SUPRASEC. ®. 5025 is a standard functionality polymeric diphenyl methane diisocyanate (MDI). Available from Huntsman.
- N-Pentane. Available form VWR Chemicals

### Example 1. Preparation of NAD-stabilizer.

In a glass reactor equipped with mechanical stirrer 175 mg of Tetrafluoroboric acid solution (48 %) were added to 308,3 g of Polyol A. After 5 minutes of stirring, 7,2 g of 3-Glycidoxypropyl-trimethoxysilane were added into the mixture and the reaction temperature was raised to 50 °C. The temperature was maintained at 50 °C for 3 h. The resulting product (NAD-stabilizer) was a transparent liquid.

### Example 2 Preparation of THP mixture A

3017.3 g of THPS (tetrakis(hydroxymethyl) phosphonium sulfate solution (75%)) were placed in a 5L steel reactor equipped with a mechanical stirrer. A solution of KOH (552,1 g of KOH flakes in 400 g of water) was added slowly over the THPS, resulting in the precipitation of potassium sulphate. Sulphate salt was filtered out and the volatile compounds of the resulting solution were distilled off in a rotavapor at a temperature of 100 °C taking 50 min to decrease the pressure to 20 mbar and maintaining it for another 30 minutes. A turbid liquid product was obtained which was cooled down to 25°C and filtered again to obtain a transparent product.

The % molar distribution of the THP derivatives was determined by 31P-NMR. Results are shown in Table 1. Other minor components may be present.

Table 1.

| mol % | | | | | | | | |
|---|---|---|---|---|---|---|---|---|
| **THPO** | **mTHPO** | **dTHPO** | **tTHPO** | **THPS** | **THP** | **mTHP** | **dTHP** | **tTHP** |
| 3,78 | 0 | 0 | 0 | 1.1 | 57,96 | 31.47 | 5.39 | 0.29 |

Example 3 Preparation of THP mixture B

THP mixture B was prepared following the process described in example 2 but the distillation at 20 mbar was performed for 3 h.

The % molar distribution of the THP derivatives was determined by 31P-NMR. Results are shown in Table 2. Other minor components may be present.

Table 2.

| mol % | | | | | | | | |
|---|---|---|---|---|---|---|---|---|
| **THPO** | **mTHPO** | **dTHPO** | **tTHPO** | **THPS** | **THP** | **mTHP** | **dTHP** | **tTHP** |
| 6.7 | 0.6 | 0.1 | 0 | 1.3 | 71.0 | 18.7 | 1.6 | 0.0 |

Example 4 Precondensate THP-Melamine A.

541.87 g of THP mixture A and 122.11 g of melamine were mixed under nitrogen atmosphere in a glass reactor equipped with mechanical stirring. The temperature was increased up to 80 °C and the mixture was allowed to react for 50 min until a clear solution was obtained.

Example 5 Precondensate THP-Melamine B.

Was prepared using the procedure described in example 4 using 442.43 g of THP mixture A and 128.77 g of melamine.

Examples 6-12 Preparation modified polymer polyol

2520 g of polyol B, 99.6 g of the NAD-stabilizer prepared in example 1 and 473.4 g of the THP mixture A were placed into a steel reactor equipped with mechanical stirring and the temperature was raised at 80 °C. Once the temperature reaches 80 °C a solution of 486.6 g of urea in 265.2 mL of water, pre-heated at 80 °C, is added under vigorous stirring, into the reactor. Then, volatile compounds are removed by distillation under vacuum (350 mbar). After removal of volatile compounds the temperature was raised to 120 °C and the reaction was maintained at that temperature for 3 h under vacuum. Then, temperature was raised at 140 °C and kept at that temperature for 1 hour.

The following table 3 summarize different examples done following the procedure described in example 6.

Table 3.

| | Polyol | | NAD-stabilizer | THP or precondensate | | Nitrogen containing compound | | Water |
|---|---|---|---|---|---|---|---|---|
| Example | Type | g | g | Type | g | Type | g | mL |
| 6 | Polyol B | 2520 | 99.6 | Mixture A | 473.4 | Urea | 486.6 | 265.2 |
| 7 | Polyol B | 2626.6 | 91.9 | Mixture A | 476.9 | Urea | 406.99 | 265.54 |
| 8 | Polyol B | 2503.5 | 88.5 | Mixture A | 322.5 4 | Urea | 322.54 | 250.0 |
| 9 | Polyol B | 2500.2 | 87.61 | Precon A | 553.3 2 | Urea | 251.65 | 198.2 |
| 10 | Polyol C | 3121.0 | 109.5 | Mixture A | 574.9 | Urea | 400.78 | 250.06 |
| 11 | Polyol B | 2006.6 | 70.6 | Mixture B | 474.7 | Urea | 154.85 | 171 |
| 12 | Polyol D | 1405,1 | 73,9 | Mixture B | 961,5 | Urea | 703,44 | 674,5 |

Examples 13-19 Stripping of polymer polyols.

The polyols of examples 6-12 were placed in a glass reactor equipped with a mechanical stirring. The temperature was raised up to 160 °C and vacuum was applied up to 20 mbar. Then nitrogen was bubbled into the mixture through a needle.
The nitrogen flux was controlled until a total pressure inside the reactor around 150 mbar was reached. Proceeding this way white solid was captured in the cold trap. The stripping was performed for 6 hours to remove all the white solid from the polyol.

Table 4 shows the example number for any stripped modified polymer polyol and its corresponding example number 6-12.

Table 4.

| Example | |
|---|---|
| 13 | Stripped example 6 |
| 14 | Stripped example 7 |
| 15 | Stripped example 8 |
| 16 | Stripped example 9 |
| 17 | Stripped example 10 |
| 18 | Stripped example 11 |
| 19 | Stripped example 12 |

Example 20. Preparation of THP mixture C

THP mixture C was prepared following the process described in example 2. The % molar distribution of the THP derivatives was determined by 31P-NMR. Results are shown in Table 5. Other minor components may be present.

Table 5.

| mol % | | | | | | | | |
|---|---|---|---|---|---|---|---|---|
| THPO | mTHPO | dTHPO | tTHPO | THPS | THP | mTHP | dTHP | tTHP |
| 6.23 | 0.92 | 0 | 0 | 2.1 | 55.22 | 29.97 | 5.31 | 0.25 |

Example 21. Preparation modified polymer polyol - Comparative

A modified polymer polyol was prepared following the procedure described in example 6, using polyol B, THP mixture C, urea and NAD-stabilizer of example 1. In this case the removal of the volatile compounds was performed under reduced pressure of 15-25 mbar as described in WO2019/008140. The steps at 120 and 140 °C were as well performed at 15-25 mbar.

The composition prepared is showed in the following table 6.

Table 6.

| | Polyol | | NAD-stabilizer | THP or precondensate | | Nitrogen containing compound | | Water |
|---|---|---|---|---|---|---|---|---|
| Example | Type | g | g | Type | g | Type | g | |
| 21 | Polyol B | 271.34 | 9.51 | Mixture C | 49.22 | Urea | 42.07 | 27.57 |

Example 22 Polyurethane flexible foams.

A batch was prepared mixing water and amines according to the foam formulation shown in the table 7. Polyols and silicone were mixed for 50 seconds at 5000 rpm into a paper cup. The corresponding quantity of batch was added to the polyol/silicone mixture and stirred, and after 5 seconds the tin octoate was added and stirred for 5 more seconds. Then the

isocyanate was added and stirring was maintained for 10 seconds.

The resulting mixture was poured into a 30.4x21.8x16.7 cm aluminium mold protected by kraft paper at 23 °C and the mixture was allowed to react in the mold for a period of 5 minutes, rise profile was monitored by a Foamat equipment. The resulting foam was removed from the mold and allowed to cure in an oven at 100°C for 15 minutes. After that curing step, the foam was stored at 23 °C and 50 % relative humidity for at least 24h.

In accordance with the present invention, the term "resilience (%)" refers to metal ball rebound on foam sample and is calculated according to UNE EN ISO-8307.

In accordance with the present invention, the term "Average Density (kg/$m^3$)" is calculated according to UNE EN ISO-845.

In accordance with the present invention, the term "CLD (kPa)" refers to Compression Load Deflection of foam sample and is calculated according to UNE EN ISO 3386/1.

In accordance with the present invention, the term "Factor SAG" refers to the ratio of CLD65% / CLD25%.

In accordance with the present invention, the term "Porosity (mm/s)" is calculated according to ASTM D737.

In accordance with the present invention, the term "compression set, 75%" refers to thickness loss of a foam sample after compression in dry conditions and is calculated according to UNE EN ISO-1856.

In accordance with the present invention, the term "wet compression set 70%" refers to thickness loss of a foam sample after compression in wet conditions, and is calculated according to ISO 13362 - 1.

The compositions prepared are showed in the following table 7.

Table 7

| | Foam 1A (1) | Foam 1B (2) | Foam 2A (1) | Foam 2B (2) | Foam 3A (1) | Foam 3B (2) | Foam 4A (1) | Foam 4B (2) | Foam 5A (1) | Foam 5B (2) | Foam 6A (1) | Foam 6B (2) | Foam 7A (1) |
|---|---|---|---|---|---|---|---|---|---|---|---|---|---|
| | pbw | | | | | | | | | | | | |
| Polyol B | 50 | 50 | 50 | 50 | 50 | 50 | 50 | 50 | 50 | 50 | 50 | 50 | 50 |
| Example 6 | 50 | 0 | 0 | 0 | 0 | 0 | 0 | 0 | 0 | 0 | 0 | 0 | 0 |
| Example 7 | 0 | 0 | 50 | 0 | 0 | 0 | 0 | 0 | 0 | 0 | 0 | 0 | 0 |
| Example 8 | 0 | 0 | 0 | 0 | 50 | 0 | 0 | 0 | 0 | 0 | 0 | 0 | 0 |
| Example 9 | 0 | 0 | 0 | 0 | 0 | 0 | 50 | 0 | 0 | 0 | 0 | 0 | 0 |
| Example 10 | 0 | 0 | 0 | 0 | 0 | 0 | 0 | 0 | 50 | 0 | 0 | 0 | 0 |
| Example 11 | 0 | 0 | 0 | 0 | 0 | 0 | 0 | 0 | 0 | 0 | 50 | 0 | 0 |
| Example 13 | 0 | 50 | 0 | 0 | 0 | 0 | 0 | 0 | 0 | 0 | 0 | 0 | 0 |
| Example 14 | 0 | 0 | 0 | 50 | 0 | 0 | 0 | 0 | 0 | 0 | 0 | 0 | 0 |
| Example 15 | 0 | 0 | 0 | 0 | 0 | 50 | 0 | 0 | 0 | 0 | 0 | 0 | 0 |
| Example 16 | 0 | 0 | 0 | 0 | 0 | 0 | 0 | 50 | 0 | 0 | 0 | 0 | 0 |
| Example 17 | 0 | 0 | 0 | 0 | 0 | 0 | 0 | 0 | 0 | 50 | 0 | 0 | 0 |
| Example 18 | 0 | 0 | 0 | 0 | 0 | 0 | 0 | 0 | 0 | 0 | 0 | 50 | 0 |
| Example 21 | 0 | 0 | 0 | 0 | 0 | 0 | 0 | 0 | 0 | 0 | 0 | 0 | 50 |
| Total water | 4.5 | 4.5 | 4.5 | 4.5 | 4.5 | 4.5 | 4.5 | 4.5 | 4.5 | 4.5 | 4.5 | 4.5 | 4.5 |
| Tegoamin®BD E | 0.15 | 0.15 | 0.15 | 0.15 | 0.15 | 0.15 | 0.15 | 0.15 | 0.15 | 0.15 | 0.15 | 0.15 | 0.15 |
| Niax L-620LV | 1 | 1 | 1 | 1 | 1 | 1 | 1 | 1 | 1 | 1 | 1 | 1 | 1 |
| KOSMOS_29 | 0.15 | 0.15 | 0.12 | 0.15 | 0.15 | 0.15 | 0.15 | 0.15 | 0.2 | 0.15 | 0.15 | 0.15 | 0.12 |
| T65 | 27.03 | 0 | 27.03 | 0 | 0 | 0 | 27.03 | 0 | 27.03 | 0 | 0 | 0 | 27.03 |
| T80 | 27.03 | 54.07 | 27.03 | 54.07 | 54.07 | 54.07 | 27.03 | 54.07 | 27.03 | 54.6 | 54.07 | 54.07 | 27.03 |
| Resilience (%) | 36 | 37 | 38 | 38 | 37 | 40 | 39 | 40 | 39 | 38 | 33 | 40 | 38 |
| Average Density ($kg/m^3$) | 22.7 | 22.9 | 23.2 | 24.2 | 22.3 | 23.4 | 22.9 | 22.8 | 22.5 | 23 | 23 | 21.3 | 23.1 |
| CLD 25% (kPa) | 3.47 | 3.86 | 3.47 | 4.03 | 3.43 | 3.55 | 3.07 | 3.19 | 3.47 | 3.79 | 4.33 | 3.04 | 3.55 |
| CLD 40% (kPa) | 4.12 | 4.48 | 4.07 | 4.66 | 4.05 | 4.09 | 3.59 | 3.67 | 4.03 | 4.33 | 5.08 | 3.53 | 4.09 |
| CLD 65% (kPa) | 9.21 | 8.98 | 8.98 | 9.46 | 8.26 | 8.37 | 7.85 | 7.35 | 8.71 | 9 | 10.37 | 7.14 | 9.24 |

(continued)

| | Foam 1A (1) | Foam 1B (2) | Foam 2A (1) | Foam 2B (2) | Foam 3A (1) | Foam 3B (2) | Foam 4A (1) | Foam 4B (2) | Foam 5A (1) | Foam 5B (2) | Foam 6A (1) | Foam 6B (2) | Foam 7A (1) |
|---|---|---|---|---|---|---|---|---|---|---|---|---|---|
| | pbw | | | | | | | | | | | | |
| Factor SAG (-) | 2.65 | 2.32 | 2.59 | 2.35 | 2.41 | 2.36 | 2.56 | 2.31 | 2.51 | 2.38 | 2.4 | 2.35 | 2.61 |
| Porosity (mm/s) | 1805 | 1470 | 2350 | 2240 | 612 | 2720 | 2905 | 2475 | 2395 | 2430 | 445 | 2960 | 2032 |
| comp. set. 75% (%) | 11.3 | 6.6 | 6.6 | 4.7 | 9.2 | 4.6 | 4.9 | 4.9 | 5.2 | 4.5 | 8.6 | 4.7 | 10.9 |
| Wet comp. set. 70% (%. (%) | 30 | 12.2 | 16.6 | 5.4 | 26.9 | 5.3 | 9.9 | 6.1 | 10.2 | 6 | 28.5 | 10.8 | 24.3 |

(1) Foam prepared using non stripped polyol (comparatives)
(2) Foam prepared using stripped polyol (according to the invention).

The results, showed in the table 7, demonstrate that the compression set of the foams, are improved when the polyol treated by stripping, according to the present invention, is used.

Example 23 Preparation of polyisocyanurate (PIR) foams.

A master batch was prepared in a glass bottle mixing polyols, blowing agents and the rest of additives according to the foam formulation shown in the table 8. The mixture was stirred for 60 second at 500 rpm. The mixture was left in the closed bottle until the complete disappearance of the air bubbles.

In a paper cup, the needed quantity of the masterbatch is weighed. Then the isocyanate is added, and the mixture of compounds is homogenized at 5000 rpm with Heidolph stirrer for 10 seconds. The resulting mixture was poured into a 30.4x21.8x16.7 cm aluminum box protected by kraft paper at 23 °C and the mixture was allowed to react in the box for a period of 5 minutes, rise profile was monitored by a Foamat equipment. The resulting foam was allowed to cure in an oven at 100°C for 15 minutes. After that curing step, the foam was stored at 23 °C and 50 % relative humidity for at least 24h.

The compositions prepared are showed in the following table 9.

Table 8

| | Comparative example 1 | Foam PIR-1A | Foam PIR-1B |
|---|---|---|---|
| Stepanpol PS 2352® | 100 | 83 | 83 |
| Example 12 | 0 | 17 | 0 |
| Example 19 | 0 | 0 | 17 |
| Water | 0.4 | 0.4 | 0.4 |
| Dabco® K-15 | 4.0 | 4.0 | 4.0 |
| Polycat® 5 | 0.2 | 0.2 | 0.2 |
| TEGOSTAB® B 84205 | 3.0 | 3.0 | 3.0 |
| n-Pentane | 20.0 | 20.0 | 20.0 |
| TCPP | 15 | 0 | 0 |
| SUPRASEC® 5025 | 200.1 | 188,2 | 188.2 |
| Density, Kg/m3 ISO 845 | 28.3 | 27.4 | 26.9 |
| Reaction to fire DIN 4102-1 | B2 | B3 | B2 |

Foam PIR-1A (without stripping step) does not pass reaction to fire DIN 4102-1 test method, whereas Foam PIR-1B does. Comparative example 1 is prepared from a commercial modified aromatic polyester polyol (Stepanpol PS 2352®) which requires the use of TCPP in order to achieve flame retardance, whereas Foam PIR-1B does not require the use of TCPP.

REFERENCES CITED IN THE APPLICATION

WO2019008140
EP3838959
EP3838962
DIN 4102-1
ASTM D4274 - 16
UNE EN ISO-845
UNE EN ISO-8307
UNE EN ISO-1856
UNE EN ISO 3386/1
ASTM D737
UNE EN ISO 13362 - 1.

## Claims

1. A process for the preparation of a modified polymer polyol comprising at least one base polyol and a stable dispersion of polymeric particles in the at least one base polyol, the process comprising

(1) preparing a crude modified polymer polyol by reacting in the at least one base polyol and under polymerisation conditions

a) at least one compound bearing at least one basic-nitrogen atom **characterized by** the presence in the molecule of at least one hydrogen atom attached to a nitrogen atom; with

b) at least one compound bearing a phosphorous atom selected from the group consisting of

b.1) at least one compound selected from a hydroxyalkylphosphine of a formula (I), at least one hydroxyalkylphosphonium salt of a formula (II), at least one hydroxyalkylphosphine oxide of a formula (III), and a combination thereof;

b.2) a mixture of condensation products resulting from the reaction of at least one hydroxyalkylphosphine compound of a formula (I) or at least one hydroxyalkylphosphonium salt of a formula (II) and at least one compound bearing at least one basic-nitrogen atom **characterized by** the presence in the molecule of at least one hydrogen atom attached to a nitrogen atom; and

b.3) mixtures thereof;

wherein:

A) the hydroxyalkylphosphine of formula (I) is as follows:

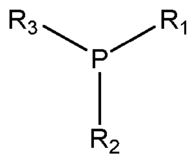

( I )

wherein $R_1$, $R_2$ and $R_3$ are each independently selected from H, linear or branched $(C_1\text{-}C_{18})$alkyl, $(C_3\text{-}C_{18})$cycloalkyl, linear or branched $(C_2\text{-}C_{18})$alkenyl, $(C_6\text{-}C_{18})$aryl, $(C_7\text{-}C_{18})$arylalkyl, linear or branched hydroxy$(C_1\text{-}C_6)$alkyl, $(C_7\text{-}C_{18})$alkylaryl and a radical of formula (IV)

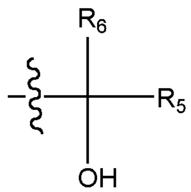

( IV )

wherein $R_5$ and $R_6$ are each independently selected from H, linear or branched $(C_1\text{-}C_{18})$alkyl, $(C_3\text{-}C_{18})$cycloalkyl, linear or branched $(C_2\text{-}C_{18})$alkenyl, $(C_6\text{-}C_{18})$aryl, $(C_7\text{-}C_{18})$arylalkyl, linear or branched hydroxy$(C_1\text{-}C_6)$alkyl,and $(C_7\text{-}C_{18})$alkylaryl; and the wavy line means the attachment point of the radical of formula (IV) to the phosphorus atom;

with the proviso that at least one of $R_1$, $R_2$ and $R_3$ is a radical of formula (IV);

B) the hydroxyalkylphosphonium salt of formula (II) is as follows:

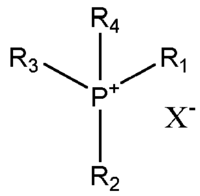

( II )

wherein $R_1$, $R_2$, $R_3$ and $R_4$ are each independently selected from H, linear or branched $(C_1-C_{18})$alkyl, $(C_3-C_{18})$cycloalkyl, linear or branched $(C_2-C_{18})$alkenyl, $(C_6-C_{18})$aryl, $(C_7-C_{18})$arylalkyl, linear or branched hydroxy$(C_1-C_6)$alkyl, $(C_7-C_{18})$alkylaryl and a radical of formula (IV):

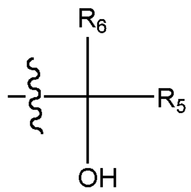

( IV )

wherein $R_5$ and $R_6$ are each independently selected from H, linear or branched $(C_1-C_{18})$alkyl, $(C_3-C_{18})$cycloalkyl, linear or branched $(C_2-C_{18})$alkenyl, $(C_6-C_{18})$aryl, $(C_7-C_{18})$arylalkyl, linear or branched hydroxy$(C_1-C_6)$alkyl, and $(C_7-C_{18})$alkylaryl; and the wavy line means the attachment point of the radical of formula (IV) to the phosphorus atom; and $X^-$ represents any anion suitable for compensate the positive charge of the phosphonium cation;
with the proviso that at least one of $R_1$, $R_2$, $R_3$ and $R_4$ is a radical of formula (IV); and

C) the hydroxyalkylphosphine oxide of formula (III) is as follows:

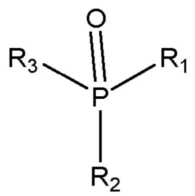

( I II )

wherein $R_1$, $R_2$ and $R_3$ are each independently selected from H, linear or branched $(C_1-C_{18})$alkyl, $(C_3-C_{18})$cycloalkyl, linear or branched $(C_2-C_{18})$alkenyl, $(C_6-C_{18})$aryl, $(C_7-C_{18})$arylalkyl, linear or branched hydroxy$(C_1-C_6)$alkyl, $(C_7-C_{18})$alkylaryl and a radical of formula (IV):

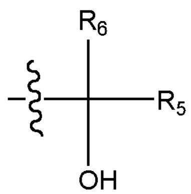

( IV )

wherein $R_5$ and $R_6$ are each independently selected from H, linear or branched $(C_1-C_{18})$alkyl, $(C_3-C_{18})$cycloalkyl, linear or branched $(C_2-C_{18})$alkenyl, $(C_6-C_{18})$aryl, $(C_7-C_{18})$arylalkyl, linear or branched hydroxy$(C_1-C_6)$alkyl, and $(C_7-C_{18})$alkylaryl; and the wavy line means the attachment point of the radical of formula

(IV) to the phosphorus atom;
with the proviso that at least one of $R_1$, $R_2$ and $R_3$ is a radical of formula (IV);
wherein the compound bearing at least one basic-nitrogen atom is selected from

- melamine, trimethylol melamine, diethylenetriamine, tertiary octylamine, polyethyleneimine, dimethylaminopropylamine;
- the compounds of formula (V) or formula (VI); and
- mixtures thereof;

wherein the compounds of formula (V) are as follows

$$R_7\text{-}NH_2 \qquad (V)$$

wherein $R_7$ is -H, -($C_1$-$C_3$)Alkyl, ($C_1$-$C_3$)Alkyl-CO-, $NH_2$-CO-, -$(CH_2)_n$-$NH_2$, -CN, -$NH_2$, -$SO_2NH_2$, cyclohexyl, phenyl, -$SO_2OH$ or -NHCONHN$H_2$; wherein n is an integer from 1-18;
and the compounds of formula (VI) are as follows:

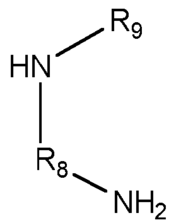

( VI )

wherein $R_8$ is selected from NH=C< and O=C<; S=C<; and $R_9$ is selected from H, -CN, -$NH_2$, -$CONH_2$, -CONHCON$H_2$, and -CONHCONHCON$H_2$;
and wherein the process further comprises

(2) purifying the crude modified polymer polyol obtained in (1) by stripping under reduced pressure ranging from 0.1 mbar to 500 mbar, wherein the stripping step is carried out by introducing a stripping medium selected from an inert gas, stream or air, into the reactor chamber or into a stripping column wherein the crude modified polymer polyol has been transferred, whereby the stripping medium at least partially removes a solid comprising a mixture of compounds comprising the unreacted compounds bearing at least one basic-nitrogen atom and reaction sub-products and
(3) recovering the purified modified polymer polyol.

**2.** The process according to claim 1, wherein previously to step (1) the process further comprises:

i) mixing at least one hydroxyalkylphosphonium salt of formula (II) with an aqueous or alcoholic solution of a base;
ii) optionally filtering out the resulting solution;
iii) distilling off the solvent and volatiles, thus obtaining the mixture b.1) of compounds bearing a phosphorus atom;
iv) optionally filtering out the resulting solution;
v) optionally reacting the mixture of compounds bearing a phosphorus atom b.1) and at least one compound bearing at least one basic nitrogen atom as defined in claim 1 to obtain a mixture b.2) of condensation products bearing a phosphorus atom;
vi) optionally oxidizing the mixture of compounds obtained in iii), the solution obtained in iv), or the mixture of condensation products obtained in v);

wherein the mixture b.1) of compounds bearing a phosphorus atom obtained in iii) comprises [bis(hydroxymethyl)phosphanyl]methanol (THP), a tetrakis(hydroxymethyl) phosphonium salt (THPX), [bis(hydroxymethyl)phosphoryl]methanol (THPO), ({[bis(hydroxymethyl)phosphanyl]methoxy}methanol (mTHP), {bis[(hydroxymethoxy)methyl]phosphanyl}methanol (dTHP), ({bis[(hydroxymethoxy)methyl]phosphanyl}methoxy)methanol (tTHP)), bis(hydroxymethyl)phosphorylmethoxymethanol (mTHPO), {bis[(hydroxymethoxy)methyl]phosphoryl}methanol (dTHPO) and ({bis[(hydroxymethoxy)methyl]phosphoryl}methoxy)methanol (tTHPO).

**3.** The process according to any of claims 1-2, wherein the mixture of compounds bearing a phosphorus atom b.1) comprises

I. [bis(hydroxymethyl)phosphanyl]methanol (THP) in a concentration from 35-85 mol%,
II. a tetrakis(hydroxymethyl) phosphonium salt (THPX) in a concentration from 0-30 mol%,
III. [bis(hydroxymethyl)phosphoryl]methanol (THPO) in a concentration from 1-15 mol%,
IV. {[bis(hydroxymethyl)phosphanyl]methoxy}methanol (mTHP) in a concentration from 0.4-40 mol%,
V. {bis[(hydroxymethoxy)methyl]phosphanyl}methanol (dTHP) in a concentration from 0-30 mol%,
VI. ({bis[(hydroxymethoxy)methyl]phosphanyl}methoxy)methanol (tTHP) in a concentration from 0-15 mol%,
VII. bis(hydroxymethyl)phosphorylmethoxymethanol (mTHPO) in a concentration from 0-20 mol%,
VIII. {bis[(hydroxymethoxy)methyl]phosphoryl}methanol (dTHPO) in a concentration from 0-10 mol%, and
IX. ({bis[(hydroxymethoxy)methyl]phosphoryl}methoxy)methanol (tTHPO) in a concentration from 0-4 mol%;

being the sum total of phosphorus containing components of the mixture 100 mol%.

**4.** The process according to any of claims 1-3, wherein previously to step (1) the process further comprises mixing the at least one base polyol with at least one NAD-stabiliser compound.

**5.** The process according to claim 4, wherein the at least one NAD-stabiliser compound is an alkoxysilane-capped polyether polyol having from 1 to 8 hydroxyl groups per molecule and from 1 to 2 alkoxysilane groups per molecule, obtainable by a process comprising capping from 1 to 2 of the terminal hydroxyl groups of a polyether polyol having a functionality from 2 to 10 and an average molecular weight from 2000 to 25000, determined according to the method identified in the specification, with a capping agent which is a compound of a formula (VII) having at least one alkoxysilane terminal group and at least one hydroxyl-reactive group; wherein the reaction of the capping agent of formula (VII) with the polyether polyol is carried out in a molar ratio from 0.05 to 2.0 mole of capping agent per mole of polyether polyol; wherein

the at least a compound of formula (VII) is of formula:

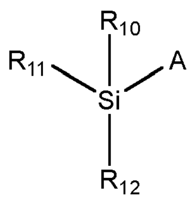

(VII)

wherein $R_{10}$, $R_{11}$ and $R_{12}$ are each independently selected from linear or branched (C1-C6)alkyl radical, linear or branched (C1-C6)alkoxyl radical and tri(C1-C3)alkylsilyloxyl radical; with the proviso that at least one of $R_{10}$, $R_{11}$ or $R_{12}$ is a (C1-C6)alkoxyl radical; and
wherein A is selected from the group consisting of those compounds of formula (VIII), (IX), (X), (XI) and (XII)

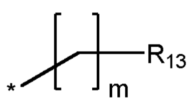

(VIII)

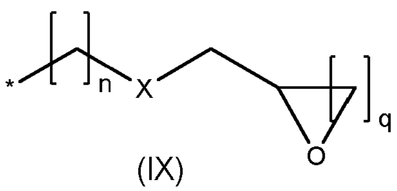

(IX)

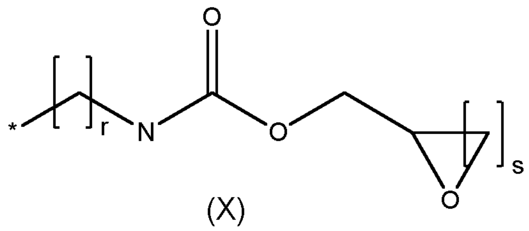

(X)

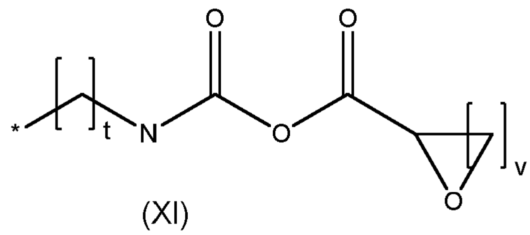

(XI)

wherein

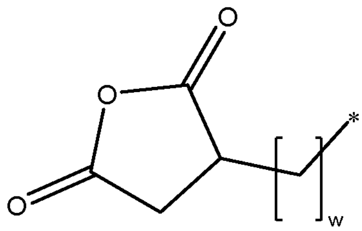

(XII)

the wavy line means the point of attachment to the Si atom in formula (VII); m, n, p, r, t and w are independently an integer selected from 1 to 6;
q, s and v are independently an integer selected from 1 to 4;
$R_{13}$ is a radical selected from -NCO,

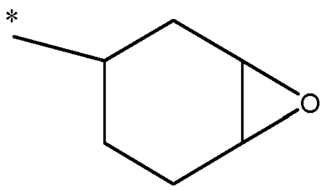

and

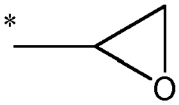

wherein the asterisk indicates the point of attachment to the rest of the group X is selected from -O- and -N($R_{14}$)-;
wherein $R_{14}$ is a radical selected from H, linear or branched (C1-C6)alkyl,

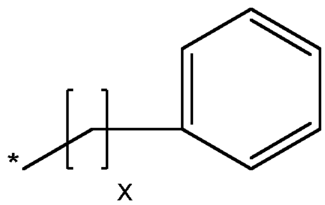

and

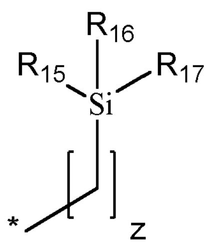

wherein the asterisk indicates the point of attachment to the N atom;
x and z are independently an integer selected from 1 to 6;
and $R_{15}$, $R_{16}$ and $R_{17}$ are each independently selected from linear or branched (C1-C6)alkyl radical, linear or branched (C1-C6)alkoxyl radical and tri(C1-C3)alkylsilyloxyl radical; with the proviso that at least one of $R_{15}$, $R_{16}$ or $R_{17}$ is a (C1-C6)alkoxyl radical or a tri(C1-C3)alkylsilyloxyl radical.

**6.** The process according to claim 5, wherein the compound of formula (VII) is selected from (3-isocyanatopropyl)trimethoxysilane, (3-isocyanatopropyl)dimethoxy(methyl)silane, (3-isocyanatopropyl)(methoxy)dimethylsilane, (3-isocyanatopropyl)dimethoxy-ethylsilane, (3-isocyanatopropyltriethoxysilane, (3-isocyanatopropyl)diethoxy(ethyl)silane, triethoxy(2-isocyanatoethyl)silane, triethoxy(isocyanatomethyl)silane, trimethoxy({3-[(oxiran-2-yl)methoxy]propyl})silane, dimethoxy(methyl){3-[(oxiran-2-yl)methoxy]propyl}silane, methoxydimethyl{3-[(oxiran-2-yl)methoxy]propyl}silane, dimethoxy(ethyl){3-[(oxiran-2-yl)methoxy]propyl}silane, triethoxy({3-[(oxiran-2-yl)methoxy]propyl})silane, diethoxy-ethyl-[3-(oxiran-2-ylmethoxy)propyl]silane, 3-(trimethoxysilyl)-N-(3-(trimethoxysilyl)propyl)-N-((oxiran-2-yl)methyl)propan-1-amine, 3-(triethoxysilyl)-N-(3-(triethoxysilyl)propyl)-N-((oxiran-2-yl)methyl)propan-1-amine, N,N-bis((trimethoxysilyl)methyl)(oxiran-2-yl)methanamine, 3-trimethoxysilylpropylcarbamoyl oxirane-2-carboxylate, 3-triethoxysilylpropylcarbamoyl oxirane-2-carboxylate, 3-trimethoxysilylethylcarbamoyl oxirane-2-carboxylate, 3-triethoxysilylethylcarbamoyl oxirane-2-carboxylate, 3-[3-(triethoxysilyl)propyl]oxolane-2,5-dione, and 3-[3-(trimethoxysilyl)propyl]oxolane-2,5-dione.

**7.** The process according to any of claims 4-6, which comprises

i) mixing at least one hydroxyalkylphosphonium salt of formula (II) with an aqueous or alcoholic solution of a base;
ii) optionally filtering out the resulting solution;
iii) distilling off the solvent and volatiles, thus obtaining the mixture b.1) of compounds bearing a phosphorus atom;
iv) optionally filtering out the resulting solution;
v) optionally reacting the mixture of compounds bearing a phosphorus atom b.1) and at least one compound bearing at least one basic nitrogen atom as defined in claim 1 to obtain a mixture b.2) of condensation products bearing a phosphorus atom;
vi) optionally oxidizing the mixture of compounds obtained in iii), the solution obtained in iv), or the mixture of condensation products obtained in v);
wherein the mixture b.1) of compounds bearing a phosphorus atom obtained in iii) comprises [bis(hydroxymethyl) phosphanyl]methanol (THP), a tetrakis(hydroxymethyl) phosphonium salt (THPX), [bis(hydroxymethyl)phosphoryl]methanol (THPO), ({[bis(hydroxymethyl)phosphanylmethoxy}methanol (mTHP), {bis[(hydroxymethoxy) methyl]phosphanyl}methanol (dTHP), ({bis[(hydroxymethoxy)methyl]phosphanyl}methoxy)methanol (tTHP)), bis(hydroxymethyl)phosphorylmethoxymethanol (mTHPO), {bis[(hydroxymethoxy)methyl]phosphoryl}methanol (dTHPO) and ({bis[(hydroxymethoxy)methyl]phosphoryl}methoxy)methanol (tTHPO).
vii) mixing the at least one base polyol with at least one NAD-stabiliser compound as defined in any of claims 5-6, thus obtaining at least one liquid polyol mixture;
the process further comprises:

(1) preparing a crude modified polymer polyol by reacting in the at least one liquid polyol mixture and under polymerisation conditions

a. the at least one compound bearing at least one basic-nitrogen atom **characterized by** the presence in the molecule of at least one hydrogen atom attached to a nitrogen atom and is selected from melamine, trimethylol melamine, dimethylaminopropylamine, diethylenetriamine, tertiary octylamine, polyethyleneimine, the compounds of formula (V) or formula (VI) as defined above and mixtures thereof; and
b. the mixture of compounds bearing a phosphorus atom b.1), the mixture of condensation products b.2), or de mixture thereof b.3);

(2) purifying the crude modified polymer polyol obtained in (1) by stripping under reduced pressure ranging from 0.1 mbar to 500 mbar, wherein the stripping step is carried out by introducing a stripping medium selected from an inert gas, stream or air, into the reactor chamber or into a stripping column wherein the crude modified polymer polyol has been transferred, whereby the stripping medium at least partially removes a solid comprising a complex mixture of compounds comprising the unreacted compounds bearing at least one basic-nitrogen atom and reaction sub-products; and
(3) recovering the purified modified polymer polyol.

**8.** The process according to any of claims 1-7, wherein the compound bearing at least one basic-nitrogen atom is selected from $NH_3$, melamine, cyanamide, urea, thiourea, diethylentriamine, hydrazine, dimethylaminopropylamine, and ethylene diamine and mixtures thereof.

**9.** A modified polymer polyol obtainable by a process according to any of claims 1-8.

**10.** A process for preparing a polyurethane material, the method comprising reacting at least one polyisocyanate with an isocyanate-reactive component which comprises at least one modified polymer polyol as defined in claim 9.

**11.** A polyurethane material obtainable by a process according to claim 10.

**12.** A process for preparing a polyisocyanurate material, the method comprising reacting a mixture of isocyanate-reactive materials, a polyisocyanate component, at least one physical blowing agent, at least one trimerization catalyst, and at

least one surfactant,

wherein the mixture of isocyanate-reactive materials comprises a mixture of at least one polyester polyol and a modified polymer polyol as described in claim 9; and
wherein the reaction mixture is reacted at an Isocyanate Index ranging from 1.5 to 7.0.

**13.** A polyisocyanurate material obtainable by the processes of claim 12.

**14.** An article of manufacture comprising the polyurethane material as defined in claim 11 or the polyisocyanurate material as defined in claim 13.

## Patentansprüche

**1.** Ein Verfahren zur Herstellung eines modifizierten Polymerpolyols, umfassend mindestens ein Basispolyol und eine stabile Dispersion von Polymerpartikeln in dem mindestens einen Basispolyol, wobei das Verfahren Folgendes umfasst:

(1) herstellen eines rohen modifizierten Polymerpolyols durch die Umsetzung, in dem mindestens einen Basispolyol und unter Polymerisationsbedingungen, von

a) mindestens einer Verbindung, die mindestens ein basisches Stickstoffatom trägt, das durch das Vorhandensein von mindestens einem an ein Stickstoffatom gebundenen Wasserstoffatom im Molekül gekennzeichnet ist; mit
b) mindestens einer Verbindung, die ein Phosphoratom trägt, ausgewählt aus der Gruppe bestehend aus

b.1) mindestens einer Verbindung, die ausgewählt ist aus einem Hydroxyalkylphosphin von einer Formel (I), mindestens einem Hydroxyalkylphosphoniumsalz von einer Formel (II), mindestens einem Hydroxyalkylphosphinoxid von einer Formel (III) und einer Kombination davon;
b.2) einer Mischung aus Kondensationsprodukten, die aus der Umsetzung von mindestens einer Hydroxyalkylphosphinverbindung von einer Formel (I) oder mindestens einem Hydroxyalkylphosphoniumsalz von einer Formel (II) und mindestens einer Verbindung, die mindestens ein basisches Stickstoffatom trägt, resultieren, **dadurch gekennzeichnet, dass** im Molekül mindestens ein an ein Stickstoffatom gebundenes Wasserstoffatom vorhanden ist; und
b.3) Mischungen davon;

wobei:

A) das Hydroxyalkylphosphin der Formel (I) wie folgt ist:

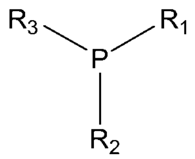

( I )

wobei $R_1$, $R_2$ und $R_3$ jeweils unabhängig voneinander ausgewählt sind aus H, linearem oder verzweigtem $(C_1\text{-}C_{18})$Alkyl, $(C_3\text{-}C_{18})$Cycloalkyl, linearem oder verzweigtem $(C_2\text{-}C_{18})$Alkenyl, $(C_6\text{-}C_{18})$Aryl, $(C_7\text{-}C_{18})$Arylalkyl, linearem oder verzweigtem Hydroxy$(C_1\text{-}C_6)$alkyl, $(C_7\text{-}C_{18})$Alkylaryl und einem Rest der Formel (IV)

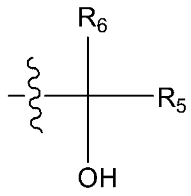

( IV )

wobei $R_5$ und $R_6$ jeweils unabhängig voneinander ausgewählt sind aus H, linearem oder verzweigtem $(C_1-C_{18})$Alkyl, $(C_3-C_{18})$Cycloalkyl, linearem oder verzweigtem $(C_2-C_{18})$Alkenyl, $(C_6-C_{18})$Aryl, $(C_7-C_{18})$Arylalkyl, linearem oder verzweigtem Hydroxy$(C_1-C_6)$alkyl und $(C_7-C_{18})$Alkylaryl; und die gewellte Linie für den Anknüpfungspunkt des Rests der Formel (IV) an das Phosphoratom steht;

mit der Maßgabe, dass mindestens eines von $R_1$, $R_2$ und $R_3$ ein Rest der Formel (IV) ist;

B) das Hydroxyalkylphosphoniumsalz der Formel (II) wie folgt ist:

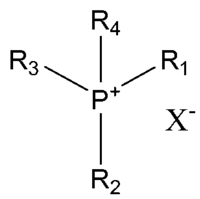

( II )

wobei $R_1$, $R_2$, $R_3$ und $R_4$ jeweils unabhängig voneinander ausgewählt sind aus H, linearem oder verzweigtem $(C_1-C_{18})$Alkyl, $(C_3-C_{18})$Cycloalkyl, linearem oder verzweigtem $(C_2-C_{18})$Alkenyl, $(C_6-C_{18})$Aryl, $(C_7-C_{18})$Arylalkyl, linearem oder verzweigtem Hydroxy$(C_1-C_6)$alkyl, $(C_7-C_{18})$Alkylaryl und einem Rest der Formel (IV):

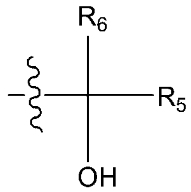

( IV )

wobei $R_5$ und $R_6$ jeweils unabhängig ausgewählt sind aus H, linearem oder verzweigtem $(C_1-C_{18})$Alkyl, $(C_3-C_{18})$Cycloalkyl, linearem oder verzweigtem $(C_2-C_{18})$Alkenyl, $(C_6-C_{18})$Aryl, $(C_7-C_{18})$Arylalkyl, linearem oder verzweigtem Hydroxy$(C_1-C_6)$alkyl und $(C_7-C_{18})$Alkylaryl; und die gewellte Linie für den Anknüpfungspunkt des Restes der Formel (IV) an das Phosphoratom steht; und $X^-$ ein beliebiges Anion darstellt, das geeignet ist, die positive Ladung des Phosphoniumkations zu kompensieren;

mit der Maßgabe, dass mindestens eines von $R_1$, $R_2$, $R_3$ und $R_4$ ein Rest der Formel (IV) ist; und

C) das Hydroxyalkylphosphinoxid der Formel (III) wie folgt ist:

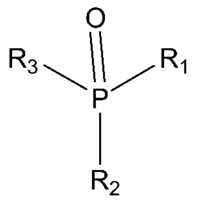

( I II )

wobei $R_1$, $R_2$ und $R_3$ jeweils unabhängig voneinander ausgewählt sind aus H, linearem oder verzweigtem $(C_1\text{-}C_{18})$Alkyl, $(C_3\text{-}C_{18})$Cycloalkyl, linearem oder verzweigtem $(C_2\text{-}C_{18})$Alkenyl, $(C_6\text{-}C_{18})$Aryl, $(C_7\text{-}C_{18})$Arylalkyl, linearem oder verzweigtem Hydroxy$(C_1\text{-}C_6)$alkyl, $(C_7\text{-}C_{18})$Alkylaryl und einem Rest der Formel (IV):

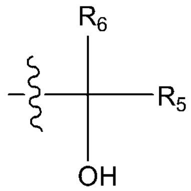

( IV )

wobei $R_5$ und $R_6$ jeweils unabhängig voneinander ausgewählt sind aus H, linearem oder verzweigtem $(C_1\text{-}C_{18})$Alkyl, $(C_3\text{-}C_{18})$Cycloalkyl, linearem oder verzweigtem $(C_2\text{-}C_{18})$Alkenyl, $(C_6\text{-}C_{18})$Aryl, $(C_7\text{-}C_{18})$Arylalkyl, linearem oder verzweigtem Hydroxy$(C_1\text{-}C_6)$alkyl und $(C_7\text{-}C_{18})$Alkylaryl; und die gewellte Linie für den Anknüpfungspunkt des Rests der Formel (IV) an das Phosphoratom steht;
mit der Maßgabe, dass mindestens eines von $R_1$, $R_2$ und $R_3$ ein Rest der Formel (IV) ist;
wobei die Verbindung, die mindestens ein basisches Stickstoffatom trägt, ausgewählt ist aus

- Melamin, Trimethylolmelamin, Diethylentriamin, tertiärem Octylamin, Polyethylenimin, Dimethylaminopropylamin;
- den Verbindungen der Formel (V) oder Formel (VI); und
- Mischungen davon;

wobei die Verbindungen der Formel (V) wie folgt sind

$R_7\text{-}NH_2$ (V)

wobei $R_7$ -H, $-(C_1\text{-}C_3)$-Alkyl, $(C_1\text{-}C_3)$ -Alkyl-CO-, $NH_2$-CO-, $-(CH_2)_n\text{-}NH_2$, -CN, - $NH_2$,$-SO_2NH_2$, Cyclohexyl, Phenyl, $-SO_2OH$ oder $-NHCONHNH_2$ ist; wobei n eine ganze Zahl von 1-18 ist;
und die Verbindungen der Formel (VI) wie folgt sind:

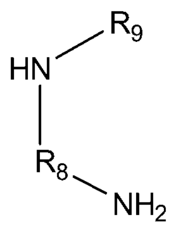

( VI )

wobei $R_8$ ausgewählt ist aus NH=C< und O=C<; S=C<; und $R_9$ ausgewählt ist aus H, -CN, $-NH_2$, $-CONH_2$, $-CONHCONH_2$, und $-CONHCONHCONH_2$;

und wobei das Verfahren ferner Folgendes umfasst:

(2) reinigen des in (1) erhaltenen rohen modifizierten Polymerpolyols durch Strippen unter vermindertem Druck im Bereich von 0,1 mbar bis 500 mbar, wobei der Strippschritt durch die Einleitung eines Strippmediums, das aus einem Inertgas, Strom oder Luft ausgewählt ist, in die Reaktorkammer oder in eine Strippkolonne, worin das rohe modifizierte Polymerpolyol überführt wurde, durchgeführt wird, wobei das Strippmedium einen Feststoff, der eine Mischung aus Verbindungen, die die nicht umgesetzten Verbindungen mit mindestens einem basischen Stickstoffatom und Reaktionsnebenprodukte umfassen, zumindest teilweise entfernt und
(3) zurückgewinnen des gereinigten modifizierten Polymerpolyols.

**2.** Das Verfahren nach Anspruch 1, wobei das Verfahren vor Schritt (1) ferner Folgendes umfasst:

i) mischen von mindestens einem Hydroxyalkylphosphoniumsalz der Formel (II) mit einer wässrigen oder alkoholischen Lösung einer Base;
ii) optionales ausfiltern der resultierenden Lösung;
iii) abdestillieren des Lösungsmittels und der flüchtigen Bestandteile, wodurch die Mischung b.1) von Verbindungen, die ein Phosphoratom tragen, erhalten wird;
iv) optionales ausfiltern der resultierenden Lösung;
v) optionales umsetzen der Mischung aus Verbindungen, die ein Phosphoratom tragen, b.1) und mindestens einer Verbindung, die mindestens ein basisches Stickstoffatom trägt, wie in Anspruch 1 definiert, um eine Mischung b.2) von Kondensationsprodukten zu erhalten, die ein Phosphoratom tragen;
vi) optionales oxidieren der in iii) erhaltenen Mischung aus Verbindungen, der in iv) erhaltenen Lösung oder der in v) erhaltenen Mischung aus Kondensationsprodukten;

wobei die in iii) erhaltene Mischung b.1) aus Verbindungen, die ein Phosphoratom tragen, [Bis(hydroxymethyl) phosphanyl]methanol (THP), ein Tetrakis(hydroxymethyl)phosphoniumsalz (THPX), [Bis(hydroxymethyl)phosphoryl]methanol (THPO), ({[Bis(hydroxymethyl)phosphanyl]methoxy}methanol (mTHP), {Bis[(hydroxymethoxy)methyl] phosphanyl}methanol (dTHP), ({Bis[(hydroxymethoxy)methyl]phosphanyl}methoxy)methanol (tTHP)), Bis(hydroxymethyl)phosphorylmethoxymethanol (mTHPO), {Bis[(hydroxymethoxy)methyl]phosphoryl}methanol (dTHPO) und ({Bis[(hydroxymethoxy)methyl]phosphoryl}methoxy)methanol (tTHPO) umfasst.

**3.** Das Verfahren nach einem der Ansprüche 1 bis 2, wobei die Mischung aus Verbindungen, die ein Phosphoratom tragen, b.1) Folgendes umfasst

I. [Bis(hydroxymethyl)phosphanyl]methanol (THP) in einer Konzentration von 35-85 Mol-%,
II. ein Tetrakis(hydroxymethyl)phosphoniumsalz (THPX) in einer Konzentration von 0-30 Mol-%,
III. [Bis(hydroxymethyl)phosphoryl]methanol (THPO) in einer Konzentration von 1-15 Mol-%,
IV. {[Bis(hydroxymethyl)phosphanyl]methoxy}methanol (mTHP) in einer Konzentration von 0,4-40 Mol-%,
V. {Bis[(hydroxymethoxy)methyl]phosphanyl}methanol (dTHP) in einer Konzentration von 0-30 mol%,
VI. ({Bis[(hydroxymethoxy)methyl]phosphanyl}methoxy)methanol (tTHP) in einer Konzentration von 0-15 mol%,
VII. Bis(hydroxymethyl)phosphorylmethoxymethanol (mTHPO) in einer Konzentration von 0-20 mol-%,
VIII. {Bis[(hydroxymethoxy)methyl]phosphoryl}methanol (dTHPO) in einer Konzentration von 0-10 Mol-% und
IX. ({Bis[(hydroxymethoxy)methyl]phosphoryl}methoxy)methanol (tTHPO) in einer Konzentration von 0-4 Mol-%;

wobei die Gesamtsumme der phosphorhaltigen Bestandteile der Mischung 100 Mol-% beträgt.

**4.** Das Verfahren nach einem der Ansprüche 1 bis 3, wobei das Verfahren vor Schritt (1) ferner das Mischen des mindestens einen Basispolyols mit mindestens einer NAD-Stabilisatorverbindung umfasst.

**5.** Das Verfahren nach Anspruch 4, wobei die mindestens eine NAD-Stabilisatorverbindung ein mit Alkoxysilan verkapptes Polyetherpolyol mit 1 bis 8 Hydroxylgruppen pro Molekül und 1 bis 2 Alkoxysilangruppen pro Molekül ist, das durch ein Verfahren erhalten werden kann, das das Verkappen von 1 bis 2 der endständigen Hydroxylgruppen eines Polyetherpolyols mit einer Funktionalität von 2 bis 10 und einem mittleren Molekulargewicht von 2000 bis 25000, bestimmt nach dem in der Patentschrift angegebenen Verfahren, mit einem Verkappungsmittel umfasst, das eine Verbindung einer Formel (VII) mit mindestens einer Alkoxysilanendgruppe und mindestens einer Hydroxyl-reaktiven Gruppe ist; wobei die Umsetzung des Verkappungsmittels der Formel (VII) mit dem Polyetherpolyol in einem

Molverhältnis von 0,05 bis 2,0 Mol Verkappungsmittel pro Mol Polyetherpolyol durchgeführt wird; wobei

die mindestens eine Verbindung der Formel (VII) folgender Formel entspricht:

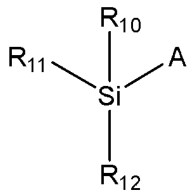

(VII)

wobei $R_{10}$, $R_{11}$ und $R_{12}$ jeweils unabhängig voneinander aus einem linearen oder verzweigten $(C_1\text{-}C_6)$Alkylrest, einem linearen oder verzweigten $(C_1\text{-}C_6)$Alkoxylrest und einem Tri$(\text{-}C_1\text{-}C_3)$alkylsilyloxylrest ausgewählt sind; mit der Maßgabe, dass mindestens einer von $R_{10}$, $R_{11}$ oder $R_{12}$ ein $(\text{-}C_1\text{-}C_6)$Alkoxylrest ist; und wobei A ausgewählt ist aus der Gruppe bestehend aus den Verbindungen der Formel (VIII), (IX), (X), (XI) und (XII)

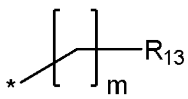

(VIII)

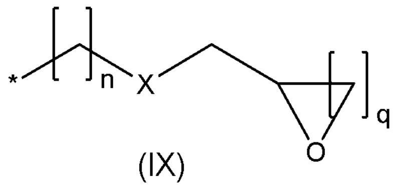

(IX)

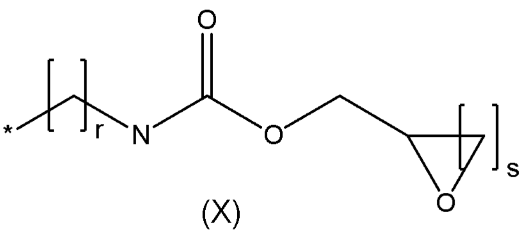

(X)

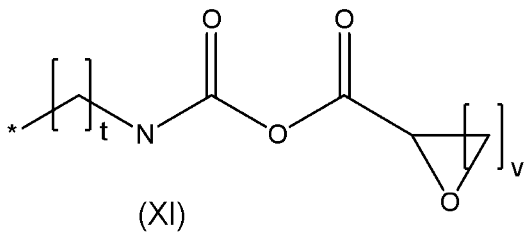

(XI)

wobei

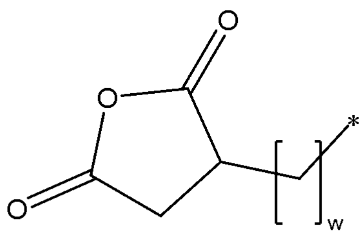

(XII)

die gewellte Linie für den Anknüpfungspunkt an das Si-Atom in Formel (VII) steht;
m, n, p, r, t und w unabhängig voneinander eine ganze Zahl sind, die aus 1 bis 6 ausgewählt ist;
q, s und v unabhängig voneinander eine ganze Zahl sind, die aus 1 bis 4 ausgewählt ist;
$R_{13}$ ein Rest ist, der ausgewählt ist aus -NCO,

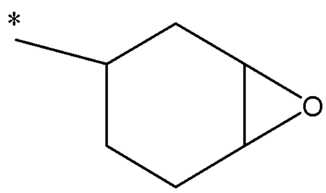

und

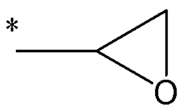

wobei das Sternchen den Anknüpfungspunkt an den Rest der Gruppe angibt; X ausgewählt ist aus -O- und -N($R_{14}$)-;
wobei $R_{14}$ ein Rest ist, der ausgewählt ist aus H, linearem oder verzweigtem ($C_1$-$C_6$)Alkyl,

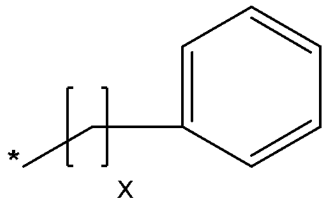

und

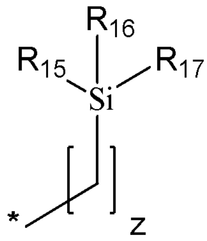

wobei das Sternchen den Anknüpfungspunkt an dem N-Atom angibt;
x und z unabhängig voneinander eine ganze Zahl sind, die aus 1 bis 6 ausgewählt ist;
und $R_{15}$, $R_{16}$ und $R_{17}$ jeweils unabhängig voneinander ausgewählt sind aus einem linearen oder verzweigten ($C_1$-$C_6$)Alkylrest, einem linearen oder verzweigten ($C_1$-$C_6$)Alkoxylrest und einem Tri(-$C_1$-$C_3$)alkylsilyloxylrest;
mit der Maßgabe, dass mindestens einer von $R_{15}$, $R_{16}$ oder $R_{17}$ ein ($C_1$-$C_6$)Alkoxylrest oder ein Tri(-$C_1$-$C_3$) alkylsilyloxylrest ist.

**6.** Das Verfahren nach Anspruch 5, wobei die Verbindung der Formel (VII) ausgewählt ist aus (3-Isocyanatopropyl)trimethoxysilan, (3-Isocyanatopropyl)dimethoxy(methyl)silan, (3-Isocyanatopropyl)(methoxy) dimethylsilan, (3-Isocyanatopropyl)dimethoxy-ethylsilan, (3-Isocyanatopropyl)triethoxysilan, (3-Isocyanatopropyl) diethoxy(ethyl)silan, Triethoxy(2-isocyanatoethyl)silan, Triethoxy(isocyanatomethyl)silan, Trimethoxy({3-[(oxiran-2-yl)methoxy]propyl})silan, Dimethoxy(methyl){3-[(oxiran-2-yl)methoxy]propyl}silan, Methoxydimethyl{3-[(oxiran-2-yl) methoxy]propyl}silan, Dimethoxy(ethyl){3-[(oxiran-2-yl)methoxy]propyl}silan, Triethoxy({3-[(oxiran-2-yl)methoxy] propyl})silan, Diethoxy-ethyl-[3-(oxiran-2-ylmethoxy)propyl]silan, 3-(Trimethoxysilyl)-N-(3-(trimethoxysilyl)propyl)-N-((oxiran-2-yl)methyl)propan-1-amin, 3-(Triethoxysilyl)-N-(3-(triethoxysilyl)propyl)-N-((oxiran-2-yl)methyl)propan-1-amin, N,N-Bis((trimethoxysilyl)methyl)(oxiran-2-yl)methanamin, 3-Trimethoxysilylpropylcarbamoyloxiran-2-carboxylat, 3-Triethoxysilylpropylcarbamoyloxiran-2-carboxylat, 3-Trimethoxysilylethylcarbamoyloxiran-2-carboxylat, 3-Triethoxysilylethylcarbamoyloxiran-2-carboxylat, 3-[3-(Triethoxysilyl)propyl]oxolan-2,5-dion und 3-[3-(Trimethoxysilyl)propyl]oxolan-2,5-dion.

**7.** Das Verfahren nach einem der Ansprüche 4 bis 6, welches Folgendes umfasst:

i) mischen von mindestens einem Hydroxyalkylphosphoniumsalz der Formel (II) mit einer wässrigen oder alkoholischen Lösung einer Base;
ii) optionales ausfiltern der resultierenden Lösung;
iii) abdestillieren des Lösungsmittels und der flüchtigen Bestandteile, wodurch die Mischung b.1) aus Verbindungen, die ein Phosphoratom tragen, erhalten wird;
iv) optionales ausfiltern der resultierenden Lösung;
v) optionales umsetzen der Mischung aus Verbindungen, die ein Phosphoratom tragen, b.1) und mindestens einer Verbindung, die mindestens ein basisches Stickstoffatom trägt, wie in Anspruch 1 definiert, um eine Mischung b.2) aus Kondensationsprodukten zu erhalten, die ein Phosphoratom tragen;
vi) optionales oxidieren der in iii) erhaltenen Mischung aus Verbindungen, der in iv) erhaltenen Lösung oder der in v) erhaltenen Mischung aus Kondensationsprodukten;
wobei die in iii) erhaltene Mischung b.1) aus Verbindungen, die ein Phosphoratom tragen, [Bis(hydroxymethyl) phosphanyl]methanol (THP), ein Tetrakis(hydroxymethyl)phosphoniumsalz (THPX), [Bis(hydroxymethyl)phosphoryl]methanol (THPO), ({[Bis(hydroxymethyl)phosphanyl]methoxy}methanol (mTHP), {Bis[(hydroxymethoxy) methyl]phosphanyl}methanol (dTHP), ({Bis[(hydroxymethoxy)methyl]phosphanyl}methoxy)methanol (tTHP)), Bis(hydroxymethyl)phosphorylmethoxymethanol (mTHPO), {Bis[(hydroxymethoxy)methyl]phosphoryl}methanol (dTHPO) und ({Bis[(hydroxymethoxy)methyl]phosphoryl}methoxy)methanol (tTHPO) umfasst;
vii) mischen des mindestens einen Basispolyols mit mindestens einer NAD-Stabilisatorverbindung wie in einem der Ansprüche 5 bis 6 definiert, wodurch mindestens eine flüssige Polyolmischung erhalten wird;
das Verfahren ferner Folgendes umfasst:

(1) herstellen eines rohen modifizierten Polymerpolyols durch Umsetzung, in der mindestens einen flüssigen Polyolmischung und unter Polymerisationsbedingungen, von

a. der mindestens einen Verbindung, die mindestens ein basisches Stickstoffatom trägt, **gekennzeichnet durch** das Vorhandensein von mindestens einem an ein Stickstoffatom gebundenen Wasserstoffatom im Molekül und ausgewählt aus Melamin, Trimethylolmelamin, Dimethylaminopropylamin, Diethylentriamin, tertiärem Octylamin, Polyethylenimin, den Verbindungen der Formel (V) oder Formel (VI) wie oben definiert und Mischungen davon; und
b. der Mischung aus Verbindungen, die ein Phosphoratom b.1) tragen, der Mischung aus Kondensationsprodukten b.2) oder der Mischung davon b.3);

(2) reinigen des in (1) erhaltenen rohen modifizierten Polymerpolyols durch Strippen unter vermindertem Druck im Bereich von 0,1 mbar bis 500 mbar, wobei der Strippschritt durch die Einleitung eines Strippmediums, das aus einem Inertgas, Strom oder Luft ausgewählt ist, in die Reaktorkammer oder in eine Strippkolonne, worin das rohe modifizierte Polymerpolyol übertragen wurde, durchgeführt wird, wobei das Strippmedium mindestens teilweise einen Feststoff entfernt, der ein komplexes Gemisch aus Verbindungen umfasst, die die nicht umgesetzten Verbindungen, die mindestens ein basisches Stickstoffatom tragen, und Reaktionsnebenprodukte enthalten; und
(3) zurückgewinnen des gereinigten modifizierten Polymerpolyols.

**8.** Das Verfahren nach einem der Ansprüche 1 bis 7, wobei die Verbindung, die mindestens ein basisches Stickstoffatom trägt, ausgewählt ist aus $NH_3$, Melamin, Cyanamid, Harnstoff, Thioharnstoff, Diethylentriamin, Hydrazin, Dimethylaminopropylamin und Ethylendiamin und Mischungen davon.

**9.** Ein modifiziertes Polymerpolyol, das durch ein Verfahren nach einem der Ansprüche 1 bis 8 erhalten werden kann.

**10.** Ein Verfahren zur Herstellung eines Polyurethanmaterials, wobei das Verfahren die Umsetzung von mindestens einem Polyisocyanat mit einem Isocyanat-reaktiven Bestandteil umfasst, der mindestens ein modifiziertes Polymerpolyol wie in Anspruch 9 definiert umfasst.

**11.** Ein Polyurethanmaterial, das durch ein Verfahren nach Anspruch 10 erhalten werden kann.

**12.** Ein Verfahren zur Herstellung eines Polyisocyanuratmaterials, wobei das Verfahren das Umsetzen von einer Mischung aus Isocyanat-reaktiven Materialien, einem Polyisocyanatbestandteil, mindestens einem physikalischen Treibmittel, mindestens einem Trimerisierungskatalysator und mindestens einem Tensid umfasst,

wobei die Mischung aus Isocyanat-reaktiven Materialien eine Mischung aus mindestens einem Polyesterpolyol und einem modifizierten Polymerpolyol wie in Anspruch 9 beschrieben umfasst; und
wobei die Reaktionmischung bei einem Isocyanatindex im Bereich von 1,5 bis 7,0 umgesetzt wird.

**13.** Ein Polyisocyanuratmaterial, das durch die Verfahren von Anspruch 12 erhalten werden kann.

**14.** Ein Herstellungsartikel, der das Polyurethanmaterial wie in Anspruch 11 definiert oder das Polyisocyanuratmaterial wie in Anspruch 13 definiert umfasst.

## Revendications

**1.** Un procédé pour la préparation d'un polyol polymère modifié comprenant au moins un polyol de base et une dispersion stable de particules polymères dans le au moins un polyol de base, le procédé comprenant

(1) préparer un polyol polymère modifié brut en faisant réagir dans le au moins un polyol de base et sous des conditions de polymérisation

a) au moins un composé portant au moins un atome d'azote basique **caractérisé par** la présence dans la molécule d'au moins un atome d'hydrogène attaché à un atome d'azote ; avec
b) au moins un composé portant un atome de phosphore choisi dans le groupe constitué par

b.1) au moins un composé choisi parmi une hydroxyalkylphosphine d'une formule (I), au moins un sel d'hydroxyalkylphosphonium d'une formule (II), au moins un oxyde d'hydroxyalkylphosphine d'une formule (III), et une combinaison de ceux-ci ;

b.2) un mélange de produits de condensation résultant de la réaction d'au moins un composé hydroxyalkylphosphine d'une formule (I) ou d'au moins un sel d'hydroxyalkylphosphonium d'une formule (II) et d'au moins un composé porteur d'au moins un atome d'azote basique **caractérisé par** la présence dans la molécule d'au moins un atome d'hydrogène attaché à un atome d'azote ; et

b.3) des mélanges de celles-ci ;

dans lequel :

A) l'hydroxyalkylphosphine de formule (I) est comme suit :

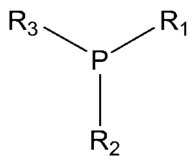

( I )

où $R_1$, $R_2$ et $R_3$ sont chacun indépendamment choisis parmi H, alkyle en ($C_1$-$C_{18}$) linéaire ou ramifié, cycloalkyle en ($C_3$-$C_{18}$), alcényle en ($C_2$-$C_{18}$) linéaire ou ramifié, aryle en ($C_6$-$C_{18}$), arylalkyle en ($C_7$-$C_{18}$), hydroxyalkyle en ($C_1$-$C_6$) linéaire ou ramifié, alkylaryle en ($C_7$-$C_{18}$) et un radical de formule (IV)

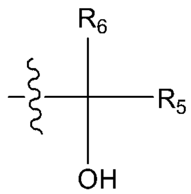

( IV )

dans laquelle $R_5$ et $R_6$ sont chacun indépendamment choisis parmi H, alkyle en ($C_1$-$C_{18}$) linéaire ou ramifié, cycloalkyle en ($C_3$-$C_{18}$), alcényle en ($C_2$-$C_{18}$) linéaire ou ramifié, aryle en ($C_6$-$C_{18}$), arylalkyle en ($C_7$-$C_{18}$), hydroxyalkyle en ($C_1$-$C_6$) linéaire ou ramifié et alkylaryle en ($C_7$-$C_{18}$) ; et la ligne ondulée désigne le point de fixation du radical de formule (IV) à l'atome de phosphore ;
à condition qu'au moins l'un parmi $R_1$, $R_2$ et $R_3$ soit un radical de formule (IV) ;

B) le sel d'hydroxyalkylphosphonium de formule (II) est comme suit :

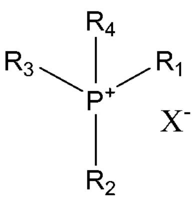

( II )

dans laquelle $R_1$, $R_2$, $R_3$ et $R_4$ sont chacun indépendamment choisis parmi H, alkyle en ($C_1$-$C_{18}$) linéaire ou ramifié, cycloalkyle en ($C_3$-$C_{18}$), alcényle en ($C_2$-$C_{18}$) linéaire ou ramifié, aryle en ($C_6$-$C_{18}$), arylalkyle en ($C_7$-$C_{18}$), hydroxyalkyle en ($C_1$-$C_6$) linéaire ou ramifié, alkylaryle en ($C_7$-$C_{18}$) et un radical de formule (IV) :

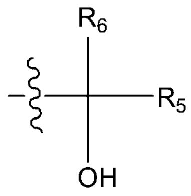

(IV)

dans laquelle $R_5$ et $R_6$ sont chacun indépendamment choisis parmi H, alkyle en ($C_1$-$C_{18}$) linéaire ou ramifié, cycloalkyle en ($C_3$-$C_{18}$), alcényle en ($C_2$-$C_{18}$) linéaire ou ramifié, aryle en ($C_6$-$C_{18}$), arylalkyle en ($C_7$-$C_{18}$), hydroxyalkyle en ($C_1$-$C_6$) linéaire ou ramifié et alkylaryle en ($C_7$-$C_{18}$) ; et la ligne ondulée désigne le point de fixation du radical de formule (IV) à l'atome de phosphore ; et $X^-$ représente tout anion approprié pour compenser la charge positive du cation phosphonium ;
à condition qu'au moins l'un parmi $R_1$, $R_2$, $R_3$ et $R_4$ soit un radical de formule (IV) ; et

C) l'oxyde d'hydroxyalkylphosphine de formule (III) est comme suit :

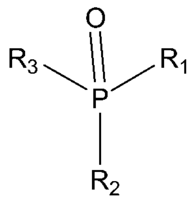

(III)

dans laquelle $R_1$, $R_2$ et $R_3$ sont chacun indépendamment choisis parmi H, alkyle en ($C_1$-$C_{18}$) linéaire ou ramifié, cycloalkyle en ($C_3$-$C_{18}$), alcényle en ($C_2$-$C_{18}$) linéaire ou ramifié, aryle en ($C_6$-$C_{18}$), arylalkyle en ($C_7$-$C_{18}$), hydroxyalkyle en ($C_1$-$C_6$) linéaire ou ramifié, alkylaryle en ($C_7$-$C_{18}$) et un radical de formule (IV) :

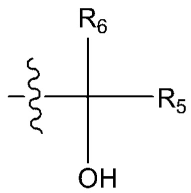

(IV)

dans laquelle $R_5$ et $R_6$ sont chacun indépendamment choisis parmi H, alkyle en ($C_1$-$C_{18}$) linéaire ou ramifié, cycloalkyle en ($C_3$-$C_{18}$), alcényle en ($C_2$-$C_{18}$) linéaire ou ramifié, aryle en ($C_6$-$C_{18}$), arylalkyle en ($C_7$-$C_{18}$), hydroxyalkyle en ($C_1$-$C_6$) linéaire ou ramifié et alkylaryle en ($C_7$-$C_{18}$) ; et la ligne ondulée désigne le point de fixation du radical de formule (IV) à l'atome de phosphore ;
à condition qu'au moins l'un parmi $R_1$, $R_2$ et $R_3$ soit un radical de formule (IV) ;
dans lequel le composé portant au moins un atome d'azote basique est choisi parmi

- la mélamine, la triméthylol mélamine, la diéthylènetriamine, l'octylamine tertiaire, la polyéthylèneimine, la diméthylaminopropylamine ;
- les composés de formule (V) ou de formule (VI) ; et
- des mélanges de ceux-ci ;

dans lequel les composés de formule (V) sont comme suit

$R_7$-$NH_2$ (V)

dans laquelle $R_7$ est -H, alkyle en -($C_1$-$C_3$), alkyle en ($C_1$-$C_3$) -CO-, $NH_2$-CO-, - $(CH_2)_n$-$NH_2$, -CN, -$NH_2$, -$SO_2NH_2$, cyclohexyle, phényle, -$SO_2$OH ou -NHCONHN$H_2$ ; où n est un entier de 1 à 18 ;
et les composés de formule (VI) sont comme suit :

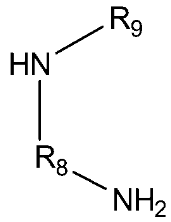

( VI )

dans laquelle $R_8$ est choisi parmi NH=C< et O=C< ; S=C< ; et $R_9$ est choisi parmi H, -CN, -$NH_2$, -$CONH_2$, -CONHCON$H_2$ et -CONHCONHCON$H_2$ ;
et dans lequel le procédé comprend en outre

(2) la purification du polyol polymère modifié brut obtenu en (1) par stripage sous pression réduite allant de 0,1 mbar à 500 mbar, dans lequel l'étape de stripage est réalisée en introduisant un milieu de stripage choisi parmi un gaz inerte, un flux ou de l'air, dans la chambre du réacteur ou dans une colonne de stripage dans laquelle le polyol polymère modifié brut a été transféré, le milieu de stripage éliminant au moins en partie un solide comprenant un mélange de composés comprenant les composés n'ayant pas réagi portant au moins un atome d'azote basique et des sous-produits de réaction et
(3) récupérer le polyol polymère modifié purifié.

**2.** Le procédé selon la revendication 1, dans lequel, avant l'étape (1), le procédé comprend en outre :

i) mélanger au moins un sel d'hydroxyalkylphosphonium de formule (II) avec une solution aqueuse ou alcoolique d'une base ;
ii) éventuellement filtrer la solution résultante ;
iii) distiller le solvant et les composants volatiles, ce qui permet d'obtenir le mélange b.1) de composés portant un atome de phosphore ;
iv) éventuellement filtrer la solution résultante ;
v) faire réagir éventuellement le mélange de composés portant un atome de phosphore b.1) et au moins un composé portant au moins un atome d'azote basique tel que défini dans la revendication 1 pour obtenir un mélange b.2) de produits de condensation portant un atome de phosphore ;
vi) éventuellement oxyder le mélange de composés obtenu en iii), la solution obtenue en iv), ou le mélange de produits de condensation obtenu en v) ;

dans lequel le mélange b.1) de composés portant un atome de phosphore obtenu en iii) comprend du [bis(hydroxyméthyl)phosphanyl]méthanol (THP), un sel de tétrakis(hydroxyméthyl)phosphonium (THPX), du [bis(hydroxyméthyl)phosphoryl]méthanol (THPO), du ({[bis(hydroxyméthyl)phosphanyl]méthoxy}méthanol (mTHP), du {bis[(hydroxyméthoxy)méthyl]phosphanyl}méthanol (dTHP), du ({bis[(hydroxyméthoxy)méthyl]phosphanyl}méthoxy)méthanol (tTHP)), du bis(hydroxyméthyl)phosphorylméthoxyméthanol (mTHPO), du {bis[(hydroxyméthoxy)méthyl]phosphoryl}méthanol (dTHPO) et du ({bis[(hydroxyméthoxy)méthyl]phosphoryl}méthoxy)méthanol (tTHPO).

**3.** Le procédé selon l'une quelconque des revendications 1 à 2, dans lequel le mélange de composés portant un atome de phosphore b.1) comprend

I. du [bis(hydroxyméthyl)phosphanyl]méthanol (THP) à une concentration de 35 à 85 % en moles,
II. un sel de tétrakis(hydroxyméthyl)phosphonium (THPX) dans une concentration de 0 à 30 % en moles,
III. du [bis(hydroxyméthyl)phosphoryl]méthanol (THPO) à une concentration de 1 à 15 % en moles,
IV. du {[bis(hydroxyméthyl)phosphanyl]méthoxy}méthanol (mTHP) à une concentration de 0,4 à 40 % en moles,
V. du {bis[(hydroxyméthoxy)méthyl]phosphanyl}méthanol (dTHP) à une concentration de 0 à 30 % en moles,

VI. du ({bis[(hydroxyméthoxy)méthyl]phosphanyl}méthoxy)méthanol (tTHP) à une concentration de 0 à 15 % en moles,
VII. du bis(hydroxyméthyl)phosphorylméthoxyméthanol (mTHPO) à une concentration de 0 à 20 % en moles,
VIII. du {bis[(hydroxyméthoxy)méthyl]phosphoryl}méthanol (dTHPO) à une concentration de 0 à 10 % en moles, et
IX. du ({bis[(hydroxyméthoxy)méthyl]phosphoryl}méthoxy)méthanol (tTHPO) à une concentration de 0 à 4 % en moles ;

étant la somme totale des composants contenant du phosphore du mélange 100 % en moles.

**4.** Le procédé selon l'une quelconque des revendications 1 à 3, dans lequel, avant l'étape (1), le procédé comprend en outre mélanger le au moins un polyol de base avec au moins un composé stabilisateur de NAD.

**5.** Le procédé selon la revendication 4, dans lequel le au moins un composé stabilisateur de NAD est un polyéther polyol coiffé par un alcoxysilane et ayant de 1 à 8 groupes hydroxyle par molécule et de 1 à 2 groupes alcoxysilane par molécule, pouvant être obtenu par un procédé comprenant le coiffage de 1 à 2 des groupes hydroxyle terminaux d'un polyéther polyol ayant une fonctionnalité de 2 à 10 et un poids moléculaire moyen de 2 000 à 25 000, déterminé selon le procédé identifié dans le fascicule de brevet, avec un agent de coiffage qui est un composé de formule (VII) ayant au moins un groupe terminal alcoxysilane et au moins un groupe réactif à l'hydroxyle ; dans lequel la réaction de l'agent de coiffage de formule (VII) avec le polyéther polyol est effectuée dans un rapport molaire allant de 0,05 à 2,0 mole d'agent de coiffage par mole de polyéther polyol ; dans lequel :

le au moins un composé de formule (VII) est de formule :

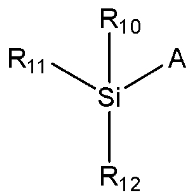

(VII)

dans laquelle $R_{10}$, $R_{11}$ et $R_{12}$ sont chacun indépendamment choisis parmi un radical alkyle en ($C_1$-$C_6$) linéaire ou ramifié, un radical alcoxyle en ($C_1$-$C_6$) linéaire ou ramifié et un radical trialkylsilyloxyle en (-$C_1$-$C_3$) ; à condition qu'au moins l'un de $R_{10}$, $R_{11}$ ou $R_{12}$ soit un radical alcoxyle en (-$C_1$-$C_6$) ; et
dans laquelle A est choisi dans le groupe constitué par les composés de formule (VIII), (IX), (X), (XI) et (XII)

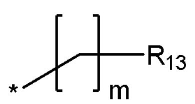

(VIII)

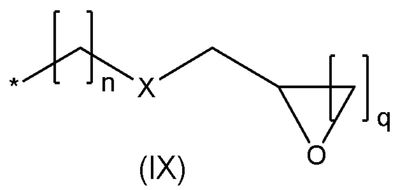

(IX)

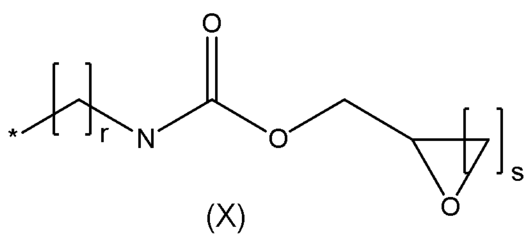

(X)

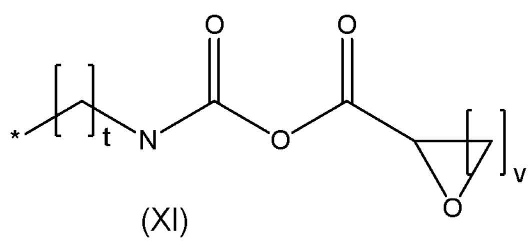

(XI)

où

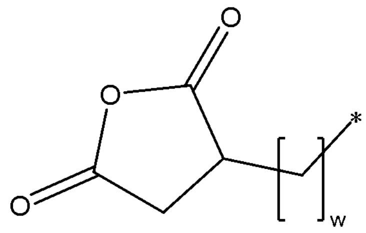

(XII)

la ligne ondulée désigne le point de fixation à l'atome de Si dans la formule (VII) ;
m, n, p, r, t et w sont indépendamment un nombre entier choisi de 1 à 6 ;
q, s et v sont indépendamment un nombre entier choisi de 1 à 4 ;
$R_{13}$ est un radical choisi parmi -NCO,

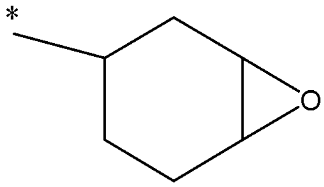

et

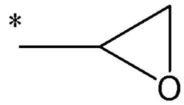

où l'astérisque indique le point de fixation au reste du groupe X est choisi parmi -O- et -N($R_{14}$)- ;
où $R_{14}$ est un radical choisi parmi H, alkyle en (-$C_1$-$C_6$) linéaire ou ramifié,

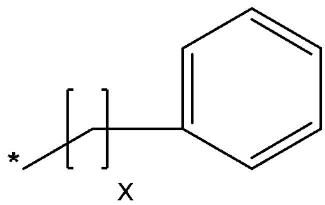

et

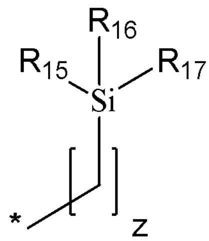

où l'astérisque indique le point de fixation à l'atome de N ;
x et z sont indépendamment un nombre entier choisi de 1 à 6 ;
et $R_{15}$, $R_{16}$ et $R_{17}$ sont chacun indépendamment choisis parmi un radical alkyle en ($C_1$-$C_6$) linéaire ou ramifié, un radical alcoxyle en ($C_1$-$C_6$) linéaire ou ramifié et un radical trialkylsilyloxyle en (-$C_1$-$C_3$) ; à condition qu'au moins l'un de $R_{15}$, $R_{16}$ ou $R_{17}$ soit un radical alcoxyle en ($C_1$-$C_6$) ou un radical trialkylsilyloxyle en (-$C_1$-$C_3$).

**6.** Le procédé selon la revendication 5, dans lequel le composé de formule (VII) est choisi parmi (3-isocyanatopropyl)triméthoxysilane, (3-isocyanatopropyl)diméthoxy(méthyl)silane, (3-isocyanatopropyl)(méthoxy)diméthylsilane, (3-isocyanatopropyl)diméthoxy-éthylsilane, (3-isocyanatopropyl)triéthoxysilane, (3-isocyanatopropyl)diéthoxy(éthyl)silane, triéthoxy(2-isocyanatoéthyl)silane, triéthoxy(isocyanatométhyl)silane, triméthoxy({3-[(oxiran-2-yi)méthoxy]propyl})silane, diméthoxy(méthyl){3-[(oxiran-2-yl)méthoxy]propyl}silane, méthoxydiméthyl{3-[(oxiran-2-yl)méthoxy]propyl}silane, diméthoxy(éthyl){3-[(oxiran-2-yl)méthoxy]propyl}silane, triéthoxy({3-[(oxiran-2-yl)méthoxy]propyl})silane, diéthoxy-éthyl-[3-(oxiran-2-ylméthoxy)propyl]silane, 3-(triméthoxysilyl)-N-(3-(triméthoxysilyl)propyl)-N-((oxiran-2-yl)méthyl)propan-1-amine, 3-(triéthoxysilyl)-N-(3-(triéthoxysilyl)propyl)-N-((oxiran-2-yl)méthyl)propan-1-amine, N,N-bis((triméthoxysilyl)méthyl)(oxiran-2-yl)méthanamine, 3-triméthoxysilylpropylcarbamoyl oxirane-2-carboxylate, 3-triéthoxysilylpropylcarbamoyl oxirane-2-carboxylate, 3-triméthoxysilyléthylcarbamoyl oxirane-2-carboxylate, 3-triéthoxysilyléthylcarbamoyl oxirane-2-carboxylate, 3-[3-(triéthoxysilyl)propyl] oxolane-2,5-dione, et 3-[3-(triméthoxysilyl)propyl]oxolane-2,5-dione.

**7.** Le procédé selon l'une quelconque des revendications 4 à 6, qui comprend

i) mélanger au moins un sel d'hydroxyalkylphosphonium de formule (II) avec une solution aqueuse ou alcoolique d'une base ;
ii) éventuellement filtrer la solution résultante ;

iii) distiller le solvant et les composants volatiles, ce qui permet d'obtenir le mélange b.1) de composés portant un atome de phosphore ;
iv) éventuellement filtrer la solution résultante ;
v) faire réagir éventuellement le mélange de composés portant un atome de phosphore b.1) et au moins un composé portant au moins un atome d'azote basique tel que défini dans la revendication 1 pour obtenir un mélange b.2) de produits de condensation portant un atome de phosphore ;
vi) éventuellement oxyder le mélange de composés obtenu en iii), la solution obtenue en iv), ou le mélange de produits de condensation obtenu en v) ;
dans lequel le mélange b.1) de composés portant un atome de phosphore obtenu en iii) comprend du [bis(hydroxyméthyl)phosphanyl]méthanol (THP), un sel de tétrakis(hydroxyméthyl)phosphonium (THPX), du [bis(hydroxyméthyl)phosphoryl]méthanol (THPO), du ({[bis(hydroxyméthyl)phosphanyl]méthoxy}méthanol (mTHP), du {bis[(hydroxyméthoxy)méthyl]phosphanyl}méthanol (dTHP), du ({bis[(hydroxyméthoxy)méthyl] phosphanyl}méthoxy)méthanol (tTHP)), du bis(hydroxyméthyl)phosphorylméthoxyméthanol (mTHPO), du {bis[(hydroxyméthoxy)méthyl]phosphoryl}méthanol (dTHPO) et du ({bis[(hydroxyméthoxy)méthyl]phosphoryl} méthoxy)méthanol (tTHPO).
vii) mélanger le au moins un polyol de base avec au moins un composé stabilisateur de NAD tel que défini dans l'une quelconque des revendications 5-6, ce qui permet d'obtenir au moins un mélange de polyols liquide ;
le procédé comprend en outre :

(1) préparer un polyol polymère modifié brut en faisant réagir dans le au moins un mélange de polyol liquide et sous des conditions de polymérisation

a. le au moins un composé portant au moins un atome d'azote basique **caractérisé par** la présence dans la molécule d'au moins un atome d'hydrogène attaché à un atome d'azote et choisi parmi la mélamine, la triméthylol mélamine, la diméthylaminopropylamine, la diéthylènetriamine, l'octylamine tertiaire, la polyéthylèneimine, les composés de formule (V) ou de formule (VI) tels que définis ci-dessus et des mélanges de ceux-ci ; et
b. le mélange de composés portant un atome de phosphore b.1), le mélange de produits de condensation b.2), ou le mélange de ceux-ci b.3) ;

(2) purifier le polyol polymère modifié brut obtenu en (1) par stripage sous pression réduite allant de 0,1 mbar à 500 mbar, dans lequel l'étape de stripage est réalisée en introduisant un milieu de stripage choisi parmi un gaz inerte, un flux ou de l'air, dans la chambre du réacteur ou dans une colonne de stripage dans laquelle le polyol polymère modifié brut a été transféré, moyennant quoi le milieu de stripage élimine au moins en partie un solide comprenant un mélange complexe de composés comprenant les composés n'ayant pas réagi portant au moins un atome d'azote basique et des sous-produits de réaction ; et
(3) récupérer le polyol polymère modifié purifié.

**8.** Le procédé selon l'une quelconque des revendications 1 à 7, dans lequel le composé portant au moins un atome d'azote basique est choisi parmi le $NH_3$, la mélamine, le cyanamide, l'urée, la thiourée, la diéthylentriamine, l'hydrazine, la diméthylaminopropylamine et l'éthylène diamine et des mélanges de ceux-ci.

**9.** Un polyol polymère modifié pouvant être obtenu par un procédé selon l'une quelconque des revendications 1 à 8.

**10.** Un procédé de préparation d'un matériau de polyuréthane, le procédé comprenant la réaction d'au moins un polyisocyanate avec un composant réactif aux isocyanates qui comprend au moins un polyol polymère modifié tel que défini dans la revendication 9.

**11.** Un matériau de polyuréthane pouvant être obtenue par un procédé selon la revendication 10.

**12.** Un procédé de préparation d'un matériau de polyisocyanurate, le procédé comprenant la réaction d'un mélange de matériaux réactifs aux isocyanates, d'un composant polyisocyanate, d'au moins un agent de gonflement physique, d'au moins un catalyseur de trimérisation et d'au moins un tensioactif,

dans lequel le mélange de matériaux réactifs aux isocyanates comprend un mélange d'au moins un polyester polyol et d'un polyol polymère modifié tel que décrit dans la revendication 9 ; et
dans lequel le mélange de réaction est mis à réagir à un indice d'isocyanate allant de 1,5 à 7,0.

**13.** Un matériau de polyisocyanurate pouvant être obtenu par les procédés de la revendication 12.

**14.** Un article manufacturé comprenant le matériau polyuréthane tel que défini dans la revendication 11 ou le matériau de polyisocyanurate tel que défini dans la revendication 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 22383106
- WO 2019008140 A
- EP 3838959 A
- EP 3838962 A